# EUROPÄISCHE PATENTSCHRIFT

(11) **EP 1 839 843 B1**
(45) Veröffentlichungstag und Bekanntmachung des Hinweises auf die Patenterteilung: **31.08.2011**
(21) Anmeldenummer: 07006314.4
(22) Anmeldetag: 27.03.2007
(51) Int. Cl.: B29C 70/50, B29C 53/24, B29C 53/04, B29K 105/08, B29L 7/00

(54) **Verfahren zur Herstellung eines strukturierten Kunststoffbauteils**
Method for producing a structured plastic component
Procédé de fabrication d'un composant plastique structuré

(30) Priorität: 27.03.2006 DE 102006014049
(43) Veröffentlichungstag der Anmeldung: 03.10.2007
(73) Patentinhaber: InnoMat GmbH, 14513 Teltow (DE); Dr. Mirtsch GmbH, 13465 Berlin (DE)
(72) Erfinder: Bauer, Annette, 15754 Senzig (DE); Chowdhury, Yvonne, 10249 Berlin (DE); Mirtsch, Schokufeh, 13465 Berlin (DE); Kurzweg, Eberhard, 14513 Teltow (DE)
(74) Vertreter: Hertz, Oliver

(56) Entgegenhaltungen:
- DE-A1- 1 579 027
- DE-A1- 2 706 899
- DE-A1- 4 437 986
- DE-A1-102004 031 240
- JP-A- 56 072 931
- US-A- 3 575 765
- US-A- 3 717 532

## Beschreibung

Die Erfindung betrifft ein Verfahren zur Herstellung eines strukturierten Kunststoffbauteils, insbesondere ein Verfahren zur Selbststrukturierung eines faserverstärkten, insbesondere schichtförmigen Materials (Strukturierungsschicht). Die Erfindung betrifft des Weiteren ein mit diesem Verfahren hergestelltes Kunststoffbauteil, insbesondere ein selbststrukturiertes faserverstärktes Kunststoffbauteil, und dessen Anwendungen.

Es ist bekannt, dünnwandige Materialien, wie z. B. Bleche oder Folien einer dreidimensionalen Selbststrukturierung zu unterziehen, beispielsweise um die Steifigkeit, die ästhetische Ansicht oder haptische Eigenschaften des Materials zu verbessern. Die dreidimensionale Selbststrukturierung wird beispielsweise in WO 94/22612 A1, WO 97/35705 A1, WO 97/39846 A1 und DE 102 18 144 A1 beschrieben.

Die dreidimensionale Selbststrukturierung wird hier umfassend auch als Wölbstrukturierung oder Beulstrukturierung bezeichnet. Die bei der dreidimensionalen Selbststrukturierung gebildeten Formen werden insbesondere mit den im Folgenden erläuterten Begriffen primäre Wölbstruktur (oder einfach: Wölbstruktur), dreidimensional wellenförmige Struktur und dreidimensionale Facettenstruktur bezeichnet.

Die dreidimensionale Selbststrukturierung ist ein Strukturierungsverfahren, bei dem eine dünne Materialbahn dadurch eine gleichmäßige, versetzte Beulstruktur erhält, dass gekrümmte Wände auf ihrer Innenseite durch Stützringe oder Stützspiralen abgestützt und durch äußeren Überdruck oder inneren Unterdruck beaufschlagt werden (DE 43 11 978 C1, DE 44 01 974 Al). Im Ergebnis bildet das Material eine regelmäßige Anordnung lokaler Mulden oder Beulen. Insbesondere nach dem Richten des strukturierten Materials in eine ebene Gestalt werden die Mulden oder Beulen auch Wölbungen genannt. Die einzelnen Wölbungen bilden lokal gekrümmte Flächenbereiche des Materials, die durch linienförmige Bereiche (auch Falten oder Stege genannt) voneinander getrennt sind.

Unter dreidimensionaler Selbststrukturierung mit der Selbstorganisation der Beulfalten ist somit ein Vorgang zu verstehen, bei dem sich der Werkstoff mehrdimensional nahezu selbstständig faltet, wodurch sich seine Formsteifigkeit verbessert. Dieser Umformprozess des Beulstrukturierens erfolgt beispielsweise in der Weise, dass das gekrümmte, dünnwandige Material, das innen durch im Abstand zueinander angeordnete, starre Stützringe oder durch eine schraubenförmige, starre Stützspirale (DE 25 57 215) abgestützt wird, durch äußeren Druck instabil wird. Diese Instabilität löst den dynamisches Vorgang des örtliches Einbeulens der gekrümmten Materialbahn aus, der in der Mechanik auch mit "Durchschlagen" und hier auch mit "Ploppen" bezeichnet wird und mit dem eine mehrdimensionale Faltung entsteht, so dass sich versetzte, viereckige Beulstrukturen bilden. Werden anstatt der starren Stützelemente flexible Stützelemente, beispielsweise aus Gummi verwendet, die sich während des Beulstrukturierens in axialer Richtung auf einem Kern verschieben können, entstehen etwa sechseckige Beulstrukturen. Diese sechseckigen Beulstrukturen lassen sich auch durch sechseckige, starre Stützelemente herstellen. Diese Beulstrukturen bestehen aus den Mulden und den Falten, wobei die Falten die Mulden einschlie-ßen. Wegen des dynamischen Durchschlagens bilden sich die Falten stets mit engen Biegeradien aus. Diese engen Biegeradien der Falten erlauben keinen sanften geometrischen Übergang von den etwa sechseckig angeordneten Falten zur eingeschlossenen Mulde. Deshalb wird die Mulde im Vergleich zu einer gleichmäßig gekrümmten Kalotte geometrisch verzerrt.

Ein Minimum an plastischer Verformung der Materialbahn tritt dann auf, wenn sich das Material in freier geometrischer Selbsteinstellung verformen kann. Hierzu wird bei der Verformung der Materialbahn mittels einer hydraulischen oder elastischen Druckübertragung die Beulstruktur mittels Stützelementen nur vorgegeben. Im Laufe der geometrischen, dreidimensionalen Strukturierung geben diese Stützelemente nach, so dass die Strukturfalten die Funktion der Stützelemente selbst übernehmen und die Beulfalten und Beulmulden in freier Selbsteinstellung eine solche optimale Form annehmen, dass sie dem herrschenden Verformungsdruck bei minimaler Plastifizierung standhalten (EP 0 888 208 B1). Dabei stellen sich etwa wappenförmige Strukturen ein, bei welchen etwa s-förmig gekrümmte Beulfalten jeweils eine Mulde einschließen, und auf diese Weise eine dreidimensionale Wappengestalt entsteht.

Beispielsweise kann die dreidimensionale Selbststrukturierung der Materialbahn unter Verwendung von Walzen, welche die Druck- und Stützelemente tragen, kontinuierlich ausgeführt werden. Die so beulstrukturierte und gerichtete Materialbahn wird auch als "primär wölbstrukturiertes" (oder einfach: "wölbstrukturiertes") Material bezeichnet.

Zwischen der zu strukturierenden Materialbahn und der Walze mit den Stützelementen kann auch eine zusätzliche elastomere Materialbahn geführt werden, wie in DE 10 2005 041 516.4 beschrieben ist. Auf diese Weise wird der dynamische Durchschlag gedämpft, und so entstehen anstatt der Falten (mit den engen Biegeradien) sanftere Rundungen, welche als "Wülste" bezeichnet werden. Zugleich bilden sich die Beulen, die von den Wülsten eingeschlossen werden, von selbst zu Kalotten mit einer gleichmäßigen Krümmung aus, die im Gegensatz zu den oben genannten Mulden nicht oder nur minimal geometrisch verzerrt sind. Die auf diese Weise entstehenden Beulstrukturen erscheinen wie mehrdimensionale Wellenzüge und werden deshalb als "dreidimensional wellenförmige Strukturen" bezeichnet. Auf diese Weise wird der Werkstoff der Materialbahn bei diesem dreidimensionalen Strukturieren sogar noch mehr geschont als beim Beul- bzw. Wölbstrukturieren mit den engen Biegeradien. Zugleich lässt sich der anschließende Richtvorgang in die ebene Gestalt erheblich vereinfachen (DE 10 2005 041 516.4).

Das strukturierte Material kann des Weiteren einer mehrstufigen, insbesondere zweistufigen dreidimensionalen Strukturierung unterzogen werden, insbesondere um räumlich facettenförmige Strukturen zu erzeugen, wie in DE 10 2005 041 555.5 (unveröffentlicht am Prioritätstag der vorliegenden Patentanmeldung) beschrieben ist.

Bei der zweistufigen dreidimensionalen Strukturierung wird die zu strukturierende Materialbahn in einem primären Strukturierungsschritt beispielsweise mit sechseckigen Beul- bzw. Wölbstrukturen oder mit dreidimensional wellenförmigen Strukturen versehen, wobei die neutrale Biegelinie durch das Strukturieren aus ihrer ursprünglichen Mittelebene einseitig in Richtung der Mulde bzw. Kalotte verschoben wird. Dadurch entsteht eine häufig unerwünschte Anisotropie, welche beispielsweise den Richtprozess erheblich erschweren kann. Im sekundären Strukturierungsschritt werden die einzelnen Mulden bzw. Kalotten auf ihrer Innenseite durch linienförmige Stützelemente abgestützt und von außen mit Druck beaufschlagt. Bei diesem sekundären "Gegenbeulen" bilden sich dreidimensionale Facettenstrukturen in der Materialbahn aus, die wie aneinander gereihte Würfel oder Pyramidenspitzen aussehen. Das besondere Merkmal dabei ist, dass trotz des dynamischen Durchschlagens beim "Gegenbeulen" nicht wieder stark gekrümmte, d.h. runde, geometrische Strukturen, sondern räumlich angeordnete Strukturflächen entstehen, die überraschenderweise im wesentlichen eben oder bestenfalls nur ganz wenig gekrümmt sind. Deshalb werden die auf diese Weise selbsteinstellend gebildeten geometrischen Strukturen mit "dreidimensionalen Facettenstrukturen" bezeichnet (DE 10 2005 041 555.5). Diese dreidimensionalen Facettenstrukturen werden manchmal anschaulich auch mit räumlichen Facettenstrukturen bezeichnet. Durch dieses "Gegenbeulen" wird die durch den primären Strukturierungsschritt verursachte einseitig verschobene neutrale Biegelinie teilweise wieder in Richtung der ursprünglichen Mittellage der Materialbahn hin verschoben. Die dreidimensional facettenförmig strukturierten Materialien erhalten eine näherungsweise richtungsunabhängige (isotrope) Versteifung, weil die etwa sechseckigen Primär-Strukturen (mit 60°-Symmetrie) jeweils in mehrere - vorzugsweise drei - Teilflächen der Sekundärstrukturen geometrisch aufgeteilt werden.

Es ist ferner bekannt, Folien oder Bleche mit einem Schichtaufbau (Sandwichkonstruktion) dreidimensional zu strukturieren. So wird z. B. in DE 4311978 C1 insbesondere eine Sandwichkonstruktion beschrieben, die aus zwei zunächst separat beulstrukturierten Materialbahnen und einer anschließend eingebrachten Kunststoffschicht besteht. Die Oberflächengüte des bereits oberflächenbeschichteten, wie beispielsweise lackierten, Ausgangsmaterials wird durch das Beul- bzw. Wölbstrukturieren praktisch nicht beeinträchtigt (DE 44 37 986 A1), weil keine herkömmlichen Formwerkzeuge mit flächigem Werkzeugkontakt zum zu verformenden Material zum Einsatz kommen.

Die dreidimensionale Selbststrukturierung zeichnet sich durch das irreversible Einspringen (dynamisches Durchschlagen) des dünnwandigen Materials in den strukturierten Zustand aus, in dem die regelmäßige Anordnung der lokalen Wölbungen (beim primären Wölbstrukturieren) gebildet ist. Zur Realisierung der Selbststrukturierung ist es erforderlich, dass das zu strukturierende, gekrümmte Material dem äußeren Druck zunächst eine elastische Gegenkraft entgegensetzt, um dann nach dem Einspringen durch teilweises Plastifizieren des Werkstoffs - insbesondere im Bereich der Falten oder Wülste - im strukturierten Zustand fixiert zu bleiben. Durch diese Anforderung war die Anwendung der herkömmlichen Verfahren zur Selbststrukturierung bisher auf bestimmte Materialien beschränkt, die den Übergang von einem elastischen in den plastisch deformierten Werkstoffzustand ermöglichen. Zu diesen Materialien zählen beispielsweise Metalle oder thermoplastische Kunststoffe (siehe DE 10 2004 031 240 A1, DE 102 59 591 A1).

Eine Anwendung der Selbststrukturierung war bei ausschließlich elastischen Materialien, beispielsweise Gummi, die lediglich ein reversibles Einspringen in den strukturierten Zustand ermöglichen würden (bei Druckentlastung verschwinden die geometrischen Strukturen wieder), und bei ausschließlich plastisch deformierbaren Materialien, die als Strukturierung lediglich einen erzwungenen Abdruck der Stützelemente ermöglichen oder zerstört werden würden (Rissbildung), ausgeschlossen.

Aus der Praxis ist auch bekannt, eine Faserschicht mit flüssigem Harz zu tränken und dabei manuell oder mit einer Maschine zwischen Blechen zu laminieren. Die Bleche werden vorgeformt oder beim Laminieren mit der Maschine geformt. Diese Techniken sind jedoch nicht zur oben beschriebenen, selbstorganisierten dreidimensionalen Strukturierung geeignet.

Die Formgebung von Kunststoffbauteilen aus faserverstärktem Harz mittels Pressverfahren, bei denen eine vorgegebene Werkzeugoberfläche in das Kunststoffmaterial gepresst und dieses anschließend ausgehärtet wird, sind aus JP 56 072931 A und aus US-A-3 717 532 bekannt.

DE 4 437 986A1 offenbart ein Verfahren gemäß dem Oberbegriff des Anspruchs 1 und ein Kunststoffbauteil gemäß dem Oberbegriff des Anspruchs 30.

Die Aufgabe der Erfindung ist es, ein verbessertes Strukturierungsverfahren anzugeben, mit dem die Nachteile der herkömmlichen Techniken überwunden werden und das einen erweiterten Anwendungsbereich aufweist. Die Aufgabe der Erfindung besteht auch in der Bereitstellung eines verbesserten mehrdimensional strukturierten Kunststoffbauteils.

Diese.Aufgaben werden durch ein Verfahren und ein Kunststoffbauteil mit den Merkmalen der unabhängigen Ansprüche gelöst. Vorteilhafte Ausführungsformen und Anwendungen der Erfindung ergeben sich aus den abhängigen Ansprüchen.

Verfahrensbezogen beruht die Erfindung insbesondere auf der technischen Lehre, eine Strukturierungsschicht, die eine Zusammensetzung aus einem Verstärkungsmaterial, vorzugsweise einem textilen Flächengebilde, und einem vernetzbaren Bindemittel enthält, einer Formung zu unterziehen, durch die eine selbststrukturierte dreidimensionale Struktur, insbesondere mit einer primären Wölbstruktur, einer dreidimensionalen wellenförmigen Struktur oder einer dreidimensionalen Facettenstruktur, gebildet wird. Die Zusammensetzung aus Verstärkungsmaterial und vernetzbarem Bindemittel, die chemisch bis zu einer vollständigen Aushärtung umsetzbar ist, wird hier auch als Prepreg bezeichnet. Das Bindemittel umfasst insbesondere ein Prepolymer (typischerweise ein Reaktivharz, das einen Aushärtungsgrad unterhalb eines vorbestimmten kritischen Umsatzes (Gelpunkt) besitzt) oder ein vernetzbares Polymer. Das Prepreg umfasst somit insbesondere ein mit Reaktivharz getränktes und vorvernetztes Faserverstärkungsmaterial (insbesondere textiles Flächengebilde). Das Prepreg ist vorzugsweise in einem nicht-klebrigen Zustand. Das Prepreg stellt ein Halbzeug, d.h. einen Gegenstand dar, der für die Weiterverarbeitung zu einem Fertigerzeugnis bestimmt ist.

Die Erfinder haben festgestellt, dass die oben genannten Anforderungen an die Materialien, die der selbstorganisierten, dreidimensionalen Strukturierung unterzogen werden, überraschenderweise unter Verwendung von Prepregs erfüllt werden können. Dabei wirken sich die Vorteile der schonenden Deformation, die für die Selbststrukturierung charakteristisch sind, bei der Bearbeitung von Prepregs besonders vorteilhaft aus. Indem die noch nicht ausgehärtete Strukturierungsschicht, sondern das Halbzeug (Prepreg) der Selbststrukturierung oder einer entsprechenden Abformung unterzogen wird, können die beschriebenen Defizite der bekannten Verfahren beseitigt werden. Das erfindungsgemäße Verfahren kann insbesondere mit den zwei folgenden Verfahrensweisen beschrieben werden.

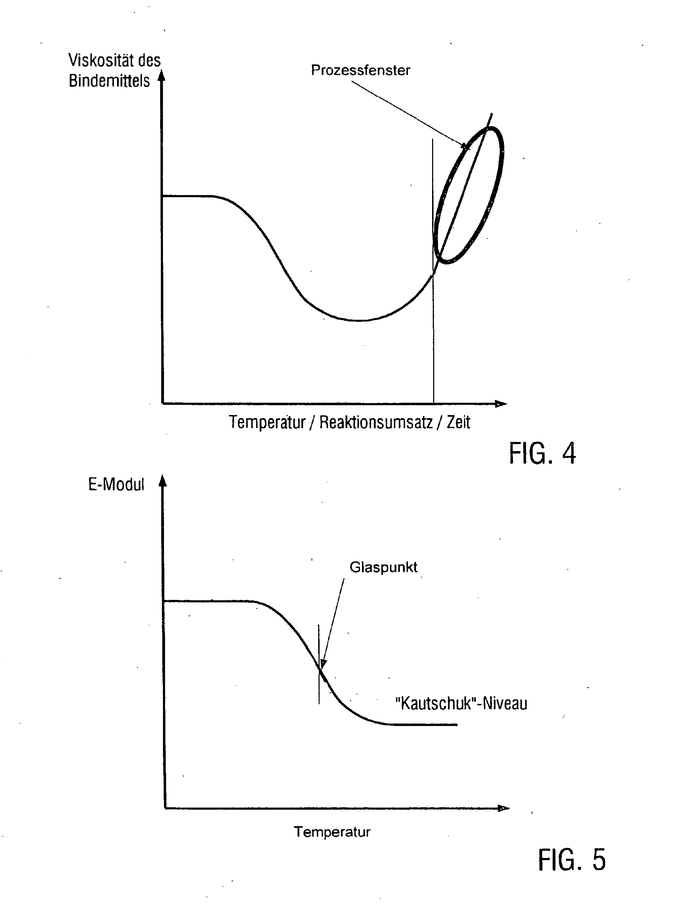

Gemäß einer ersten Ausführungsvariante kann das teilweise oder nahezu ausgehärtete Prepreg der Selbststrukturierung unterzogen werden, wobei das Bindemittel des Pregregs während dieses Vorgangs vom gummielastischen in einen glasartigen Zustand übergeht (Glasübergang) und sich das Prepreg auf diese Weise ähnlich gut selbststrukturieren lässt wie metallische Werkstoffe. Bei dieser Selbststrukturierung werden bevorzugt materialspezifische Reaktionsbedingungen (so genanntes Prozessfenster) des temperatur- und zeitabhängigen chemischen Reaktionsumsatzes für den Aushärtevorgang des Prepregs eingehalten. Die Reaktionsbedingungen während der dreidimensionalen Strukturierung werden in einem Bereich gewählt, in dem die Viskosität des Prepregs in Abhängigkeit von der Temperatur - parallel zum chemischen Reaktionsumsatz ansteigt (siehe unten, Figur 4). Der Anpressdruck wird vorzugsweise so gewählt, dass eine Lockerung des Verbundes zwischen dem Verstärkungsmaterial und dem Bindemittel (beispielsweise bei einer denkbaren Schrumpfung) vermieden und eine optimale Oberfläche erzeugt wird. Die Reaktionsbedingungen im Prozessfenster werden so gewählt, dass die erzeugten Strukturen in dem faserverstärkten Kunststoff bei dessen Endaushärtung bei erhöhter Temperatur erhalten bleiben und die plastischen Anteile - insbesondere im Bereich der Falten und Wülste - der erzeugten Strukturen ausreichend fixiert werden. Es hat sich gezeigt, dass dies ermöglicht wird, obwohl durch eine erhöhte Temperatur beim Aushärten der Elastizitätsmodul reduziert wird und tendenziell zu einer Verlagerung der auftretenden Materialspannungen vom plastischen in den elastischen Bereich führen könnte (siehe unten, Figur 5). Die Reaktionsbedingungen im Prozessfenster können vom Fachmann mit dem konkret verwendeten Prepreg aus Tabellenwerten oder durch einfache Versuchsreihen ermittelt werden.

Gemäß einer zweiten Ausführungsvariante kann das nicht oder nur wenig ausgehärtete Prepreg als Mehrlagenschicht gemeinsam mit mindestens einer Stützschicht, vorzugsweise mit metallischen, dünnen oberen und unteren Gurten der Strukturierung unterzogen werden. Dabei befinden sich die Gurte im elastisch/plastischen Übergangszustand und genügen somit den Anforderungen der Selbststrukturierung. Das zwischen den Gurten eingebettete Prepreg wird dabei mit Hilfe der Gurte isometrisch verformt. Das besondere Merkmal besteht hierbei darin, dass das Prepreg zwischen den Gurten zwar abgeformt wird, jedoch die Vorteile der materialschonenden, mehrdimensionalen dreidimensionalen Selbststrukturierung aufrecht erhalten bleiben. Dabei können sich die Verstärkungsfasern zwischen den Gurten sogar im Bereich der mehrdimensionalen Krümmungen der strukturierten Mehrlagenschicht in mikroskopischen Dimensionen umordnen und verschränken.

Auch bei der zweiten Ausführungsvariante erfolgt bei der Aushärtung der Übergang vom gummielastischen in den glasartigen Zustand (Glasübergang), wobei dies jedoch durch die Wirkung der Stützschichten zeitlich nach der Umformung erfolgen kann.

In beiden Fällen kann die geometrische Struktur, insbesondere der primären Wölbstruktur, der dreidimensionalen wellenförmigen Struktur oder der dreidimensionalen Facettenstruktur, gebildet werden. Die dreidimensional wellenförmige Strukturierung kann der primären Wölbstrukturierung vorzuziehen sein, weil die Rundungen der Wülste sanfter sind als die der Falten und so das Verstärkungsmaterial, insbesondere bei Kohlefasern, weniger belastet wird und ferner ein nachfolgender Richtprozess in die ebene Gestalt etwas einfacher wird. Die dreidimensionale Facettenstrukturierung bietet den wesentlichen Vorteil, dass der faserverstärkte und strukturierte Kunststoff nicht nur eine verbesserte isotrope Steifigkeit gewinnt, sondern gleichzeitig mit reduziertem Richtaufwand eine gute Planlage erzielt wird. Vorteilhaft kann das Prinzip der dreidimensionalen Wellenstrukturierung in das dreidimensionale Facettenstrukturieren integriert werden, indem mit Hilfe einer zusätzlichen elastischen Zwischenlage anstatt der Falten die Wülste erzeugt werden.

Ein wichtiger Vorteil der Erfindung besteht darin, dass Faserrisse beim dreidimensionalen Strukturieren vermieden werden und zugleich der faserverstärkte Kunststoff mit einer hohen mehrdimensionalen Formsteifigkeit ausgestattet wird. Die Anwendung der Selbststrukturierung auf Prepregs stellt entsprechend einen erheblichen Fortschritt dar.

Vorrichtungsbezogen wird die genannte Aufgabe der Erfindung entsprechend durch die Bereitstellung eines Kunststoffbauteils mit einer Strukturierungsschicht gelöst, die Verstärkungsmaterial und Bindemittel enthält und eine durch Selbstorganisation, insbesondere Selbststrukturierung gebildete Wölbstruktur,insbesondere mit der primären Wölbstruktur, der dreidimensional wellenförmigen Struktur oder der dreidimensionalen Facettenstruktur aufweist. Das Kunststoffbauteil stellt insbesondere ein Leichtbauteil mit einem faserverstärkten Kunststoffmaterial dar, das sich durch mechanische und optische Eigenschaften auszeichnet, die mit faserverstärkten Materialien bisher nicht erreicht wurden. Beispielsweise konnte die Biegesteifigkeit pro Fläche mit einem erfindungsgemäßen Kunststoffbauteil etwa bis zu einem Faktor 20 im Vergleich zu herkömmlichen Schichtmaterialien aus faserverstärktem Kunststoff erhöht werden.

Wenn die Selbststrukturierung der Strukturierungsschicht mit den an sich bekannten Selbststrukturierungsverfahren erfolgt, wie sie beispielsweise in WO 94/22612 A1, WO 79/35705 A1, WO 97/39846 A1 oder DE 102 18 144 A1 beschrieben sind, ergeben sich Vorteile aus der Anwendbarkeit der verfügbaren Strukturierungsmaschinen. So wird gemäß einer bevorzugten Ausführungsform der Erfindung die Strukturierungsschicht mit der Zusammensetzung aus Verstärkungsmaterial und nicht vollständig vernetztem Bindemittel mit einer ersten (z. B. unteren) Oberfläche auf ersten Stützelementen angeordnet, während an der entgegengesetzten (z. B. oberen) Oberfläche ein erstes Druckelement flächig'anliegt. Wenn die Stütz- und Druckelemente zusammengedrückt werden, wird die Strukturierungsschicht mit einem Druck beaufschlagt, unter dessen Wirkung die regelmäßige Wölbstruktur gebildet wird.

Nach der Wölbstrukturierung kann die Strukturierungsschicht eine Krümmung aufweisen, da durch die Wölbungen die neutrale Biegelinie aus der ursprünglichen Schichtebene herausgeschoben wurde. In Abhängigkeit von der konkreten Anwendung der Erfindung kann diese Krümmung unerwünscht sein. Diese ggf. unerwünschte Krümmung kann mit Hilfe einer elastischen Zwischenlage reduziert werden, wie sie in DE 10 2005 041 516.4 beschrieben ist. So entstehen die dreidimensional wellenförmigen Strukturen. Zusätzlich kann die wölbstrukturierte oder die dreidimensional wellenförmige Strukturierungsschicht anschließend gemäß einer bevorzugten Variante einer Nachstrukturierung (Sekundärstrukturierung) unterzogen werden, bei der die bereits wölbstrukturierte oder dreidimensional wellenförmige Strukturierungsschicht mit einer weiteren Kombination aus zweiten Druck- und Stützelementen einer weiteren Selbststrukturierung unterzogen wird. Die Nachstrukturierung umfasst vorzugsweise die Schritte, die in DE 10 2005 041 555.5 beschrieben sind, wobei die dreidimensional facettenförmigen Strukturen entstehen. Die Nachstrukturierung erfolgt entsprechend vorzugsweise mit einer zur Wölbstrukturierung umgekehrten Orientierung. Alternativ zur Nachstrukturierung kann ein Richten vorgesehen sein, falls die wölbstrukturierte oder dreidimensional wellenförmige Strukturierungsschicht noch in einem vor- oder teilvernetzten Zustand ist. Das Richten erfolgt somit in einem Zeitbereich, in dem die wölbstrukturierte oder dreidimensional wellenförmige Strukturierungsschicht noch nicht vollständig ausgehärtet ist.

Vorzugsweise erfolgt die Bildung der selbststrukturierten dreidimensionalen Struktur (primäre Wölbstrukturen, dreidimensional wellenförmige Strukturen oder dreidimensional facettenförmigen Strukturen) der Strukturierungsschicht gemäß der o. g. ersten Ausführungsvariante durch die Druckbeaufschlagung mittels Selbstorganisation der Strukturierungsschicht.

Alternativ können gemäß ebenfalls der o. g. ersten Ausführungsvariante die ersten oder zweiten Stützelemente als Formwerkzeuge verwendet werden und hierzu eine Geometrie entsprechend einer durch Selbstorganisation gebildeten Struktur aufweisen, so dass die dreidimensionale Strukturierung durch die Druckbeaufschlagung mittels Formung der Strukturierungsschicht durch die ersten oder zweiten Stützelementen erfolgt. In diesem Fall weisen die ersten oder zweiten Stützelemente vorzugsweise Oberflächen auf, deren Konturen aus den an sich bekannten Selbststrukturierungsverfahren topographisch entnommen und geformt sind.

Ein weiterer wichtiger Vorteil der Erfindung besteht darin, dass die Aushärtung des Bindemittels, d.h. die Umwandlung in einen vollständig vernetzten Zustand, entsprechend verschiedenen Gestaltungen der Erfindung während der Selbststrukturierung oder zeitlich nach der Selbststrukturierung erfolgen kann. Die Erfinder haben festgestellt, dass einerseits die dreidimensionale Strukturierung der Strukturierungsschicht und andererseits die Aushärtung der Strukturierungsschicht unabhängig voneinander ausführbar sind. Wenn das Prepreg eine Glastemperatur oberhalb der Umgebungstemperatur aufweist, unter der die weitere Verarbeitung und/oder Anwendung des Kunststoffbauteils erfolgt, typischerweise eine Glastemperatur oberhalb der Raumtemperatur, wie z. B. oberhalb von 50°C, so ist es nicht zwingend erforderlich, dass die Aushärtung sofort während der dreidimensionalen Strukturierung erfolgt.

Wenn die Aushärtung des Bindemittels während der dreidimensionalen Strukturierung beginnt oder erfolgt, so kann dies Vorteile für eine schnelle und effektive Prozessführung haben. Eine Aushärtungseinrichtung vorzugsweise mit integrierter Temperierung (für die chemische Umsatz-Reaktion) kann insbesondere in die Kombination aus Druckelementen - und dreidimensionalen Stützelementen integriert sein. Auf diese Weise kann gleichzeitig ein ausreichender Anpressdruck für den innigen Faser/Kunststoff-Verbund erzeugt werden, so dass mit einer einzigen Maschine ein fertig strukturiertes Kunststoffbauteil herstellbar ist. Wenn die Aushärtung nach der dreidimensionalen Strukturierung erfolgt, können sich Vorteile für die schonende Umformung der Strukturierungsschicht während der dreidimensionalen Strukturierung und/oder die vergrößerte Variabilität bei einer eventuellen Weiterverarbeitung ergeben. Die Aushärtung nach der dreidimensionalen Strukturierung kann bedeuten, dass die Aushärtung zeitlich unmittelbar nach der Strukturierung, d.h. ohne Zwischenschaltung weiterer Verfahrensschritte erfolgt. Die selbststrukturierte Strukturierungsschicht wird beim Austritt aus der Kombination aus Stütz- und Druckelementen direkt in einer Aushärtungseinrichtung angeordnet und dort der Aushärtung unterzogen. Alternativ können zwischen der dreidimensionalen Strukturierung und der Aushärtung Zwischenschritte vorgesehen sein, die beispielsweise die Anpassung des Kunststoffbauteils an die geometrischen, mechanischen, optischen oder weiteren Anforderungen einer konkreten Anwendung umfassen. Wenn die Aushärtung durch eine Erwärmung der Strukturierungsschicht bewirkt wird, so kann die Erwärmung insbesondere bei kontinuierlicher Prozessführung in Abhängigkeit von der Geschwindigkeit des chemischen Aushärtens und der Transportgeschwindigkeit der Strukturierungsschicht bereits vor der dreidimensionalen Strukturierung begonnen werden. Damit wird vorteilhafterweise eine Verzögerung vermieden, die durch einen in der Regel instationären Wärmefluss von einer Heizquelle in die Strukturierungsschicht verursacht werden würde.

Wenn die oben genannte zweistufige Selbststrukturierung mit einer primären Wölbstruktur bzw. dreidimensional wellenförmigen Strukturierung und einer anschließenden Nachstrukturierung vorgesehen ist, kann die Aushärtung entsprechend während oder nach der Nachstrukturierung vorgesehen sein.

Ein erfindungsgemäßes Kunststoffbauteil umfasst die Zusammensetzung aus Verstärkungsmaterial und Bindemittel entsprechend mit einem Zustand des Bindemittels, das (nach der Aushärtung) vollständig vernetzt ist, so dass ein Kunststoff gebildet wird. Alternativ kann das Kunststoffbauteil nur teilweise ausgehärtet oder wie während der dreidimensionalen Strukturierung teilvernetzt sein und vernetzbares Bindemittel enthalten.

Gemäß bevorzugten Gestaltungen der Erfindung umfasst die Aushärtung des Bindemittels eine thermische Behandlung der Strukturierungsschicht, eine strahlenchemische Behandlung der Strukturierungsschicht oder eine Kombination aus diesen. Vorteilhafterweise können hierzu an sich verfügbare Aushärtungseinrichtungen, wie z. B. Heizeinrichtungen und/oder Bestrahlungseinrichtungen, wie z. B. UV-Lichtquellen verwendet werden.

Ein weiterer wichtiger Vorteil der Erfindung besteht in der hohen Gestaltungsfreiheit bei der Bereitstellung der Strukturierungsschicht zwischen den Druck- und Stützelementen. Gemäß einer ersten Variante der Erfindung wird ausschließlich die Strukturierungsschicht, bestehend aus der Zusammensetzung aus Verstärkungsmaterial und vernetzbarem Bindemittel der Selbststrukturierung unterzogen. In diesem Fall wird vorzugsweise ein trockenes, nicht-klebriges Prepreg der Selbststrukturierung unterzogen. Die Erfinder haben festgestellt, dass ein zu dem oben beschriebenen Einspringen herkömmlich verwendeter Materialien in den strukturierten Zustand ähnliches Verhalten mit teilweise vernetzten Bindemitteln, insbesondere teilvernetzten Harzen realisierbar ist. Die Selbststrukturierung einzelner Strukturierungsschichten hat Vorteile insbesondere in Bezug auf die einfache Verfahrensführung und die Bereitstellung besonders leichter Kunststoffbauteile.

Gemäß der o. g. zweiten Ausführungsvariante der Erfindung kann die Strukturierungsschicht als Teil eines Schichtaufbaus zwischen den Druck- und Stützelementen angeordnet werden. Der Schichtaufbau umfasst mindestens eine Stützschicht, die entsprechend mindestens einseitig mit der Strukturierungsschicht verbunden ist, die das Verstärkungsmaterial und das vernetzbare Bindemittel enthält. Die mindestens eine Stützschicht umfasst ein Material, das zur Selbststrukturierung geeignet ist. Vorteilhafterweise kann durch die Kombination der Strukturierungsschicht mit der mindestens einen Stützschicht die selbstorganisierende Strukturierung der Strukturierungsschicht unterstützt werden.

Es sind vorzugsweise zwei Stützschichten vorgesehen, zwischen denen die Strukturierungsschicht während der dreidimensionalen Selbststrukturierung angeordnet ist. Die Einbettung der Strukturierungsschicht zwischen zwei Stützschichten hat vorteilhafterweise drei Wirkungen, die einzeln oder in Kombination die mechanischen Eigenschaften des erfindungsgemäßen Kunststoffbauteils verbessern. Die erste Wirkung besteht in der Unterstützung des Einspringens der Strukturierungsschicht in die geometrischen Strukturen, beispielsweise primären Wölbstruktur. Damit kann erfindungsgemäß erleichtert werden, dass Prepregs der Selbststrukturierung unterzogen werden können. Eventuelle Beschränkungen hinsichtlich der Materialeigenschaften werden überwunden. Die zweite Wirkung besteht darin, dass die Stützschichten bei der Selbststrukturierung eine Relativbewegung in Bezug auf die Strukturierungsschicht ausführen. Im Ergebnis wird das Verstärkungsmaterial, insbesondere das Fasermaterial, in der Strukturierungsschicht verschränkt, so dass die mechanischen Eigenschaften des Kunststoffbauteils, insbesondere die Zug- und Reißfestigkeit erheblich verbessert werden. Die dritte Wirkung besteht darin, dass zwischen der Strukturierungsschicht und den Stützschichten insbesondere während der Selbststrukturierung ein Reibschluss besteht. Durch die gegenseitige Reibung werden Kräfte insbesondere an den Stegen oder Falten der strukturierten Strukturierungsschicht abgeleitet, so dass die Deformation des Prepregs besonders schonend erfolgt. Die Verminderung der Deformation der Prepregs auf ein Minimum ist insbesondere bei Prepregs, die riss- oder bruchempfindliche Fasern enthalten, von Vorteil.

Vorzugsweise ist mindestens eine Stützschicht aus einem metallischen Material und/oder einem Kunststoffmaterial hergestellt. Erfindungsgemäß können alle Metalle oder Legierungen verwendet werden, die den gewünschten elastischen-plastischen Übergangsbereich für das Einspringen der selbstorganisierenden Struktur aufweisen, wie z. B. Stahl oder Aluminium. Eine Kunststoff-Stützschicht besteht vorzugsweise aus einem thermoplastischen Werkstoff wie z. B. PVC.

Vorteilhafterweise kann die mindestens eine Stützschicht gelocht sein. In diesem Fall können sich Vorteile durch eine unmittelbare Einwirkung einer Aushärtungseinrichtung auf die Strukturierungsschicht, z. B. Bestrahlung, oder durch eine Gewichtsersparnis ergeben. Aus metallischen Materialien hergestellte Stützschichten haben den zusätzlichen Vorteil, dass sie für eine induktive Heizung der Strukturierungsschicht verwendet werden können.

Vorteilhafterweise kann die mindestens eine Stützschicht nicht nur zur Unterstützung der Selbststrukturierung der Strukturierungsschicht mit den obengenannten Wirkungen, sondern als eigenständiger Bestandteil des erfindungsgemäßen Kunststoffbauteils vorgesehen sein. Entsprechend umfasst gemäß einer bevorzugten Ausführungsform der Erfindung das Kunststoffbauteil die selbststrukturierte Strukturierungsschicht, die mindestens einseitig mit einer identisch selbststrukturierten Stützschicht, vorzugsweise auf der Grundlage von Metall oder Kunststoff, verbunden ist. Alternativ kann eine Trennung der Strukturierungsschicht von der mindestens einen Stützschicht nach der Selbststrukturierung, vorzugsweise nach der Aushärtung vorgesehen sein. In diesem Fall trägt gemäß einer weiteren bevorzugten Gestaltung der Erfindung die Strukturierungsschicht oder die mindestens eine Stützschicht mindestens einseitig ein haftverminderndes Mittel, wie z.B. PTFE oder Silikon.

Gemäß einer weiteren Variante der Erfindung kann die Strukturierungsschicht als Teil eines Schichtaufbaus zwischen den Druck- und Stützelementen angeordnet werden, wobei eine elastische Zusatzschicht zwischen den Stützelementen, insbesondere der Stützelementwalze (siehe unten) und der Strukturierungsschicht verwendet wird. In diesem Fall ergeben sich insbesondere dann Vorteile, wenn die Zusatzschicht später nicht mehr als fester Bestandteil des wölbstrukturierten Kunststoffbauteils benötigt wird. Der Vorteil der elastischen Zusatzschicht besteht ferner darin, dass sie in analoger Weise wie die festen Stützschichten (z. B. aus Metall oder Kunststoff) ein materialschonendes Verschränken der Fasern in der Strukturierungsschicht ermöglicht und darüber hinaus wiederverwendbar ist. Die elastische Zusatzschicht kann gemäß einer bevorzugten Variante mit den Stützelementen fest verbunden, d. h. integraler Bestandteil der Walze mit den Stützelementen sein.

Zusätzlich kann zwischen der Zusatzschicht und der Strukturierungsschicht eine dünne Folie, z. B. aus Kunststoff vorgesehen sein, die sich nach dem Strukturieren wieder leicht von der strukturierten Strukturierungsschicht abziehen lässt.

Gemäß einer weiteren Variante der Erfindung bilden die Stützelemente ein Werkzeug mit einer starren geometrischen Werkzeugoberfläche, die so gebildet ist, dass sie der Oberflächengestalt der selbststrukturierten Strukturierungsschicht entspricht. Die Stützelemente sind so geformt, wie die durch Selbstorganisation gebildete geometrische Struktur der Strukturierungsschicht. Diese Formung kann exakt oder angenähert vorgesehen sein. Eine näherungsweise Formung entsprechend der gewünschten Gestalt der Strukturierungsschicht ist bspw. gegeben, wenn die Stützelemente komplementär zur Form und Ausrichtung der Wölbungen der strukturierten Strukturierungsschicht ausgerichtet sind. Vorteilhafterweise wird damit ebenfalls eine riss- oder bruchfreie Verschränkung von Fasern in der Strukturierungsschicht erreicht. Diese Verschränkung kann mit einer dünnen Folie zwischen der Strukturierungsschicht und den Stützelementen begünstigt werden. Es kann vorgesehen sein, dass diese Folie nach der Selbststrukturierung vom Kunststoffbauteil abgezogen wird.

Vorteilhafterweise ist die Umsetzung der Erfindung nicht auf die Verwendung bestimmter Verstärkungsmaterialien in der Strukturierungsschicht beschränkt. Es können insbesondere Naturfasern oder synthetische Fasern verwendet werden. Die Verwendung von Zellulosefasern, Glasfasern, Textilfasern, Kohlefasern oder Zusammensetzungen aus diesen hat den besonderen Vorteil, dass diese Faserarten die erfindungsgemäß verwendete Selbststrukturierung besonders gut tolerieren.

Besondere Vorteile für die Verfahrensführung ergeben sich, wenn als Fasermaterial faserhaltige Flächenhalbzeuge verwendet werden, die z. B. Vliese, Filze, Gewebe, Geflechte, Gestricke, Gelege oder Kombinationen aus diesen umfassen. Die Verwendung von insbesondere textilen Flächenhalbzeugen ermöglicht, dass das erfindungsgemäße Verfahren mit einem Vorbereitungsschritt ausgeführt wird, bei dem das Flächenhalbzeug mit dem vernetzbaren Bindemittel getränkt wird, bevor die Zusammensetzung aus dem Verstärkungsmaterial und dem Bindemittel der Selbststrukturierung unterzogen wird.

Wenn als faserhaltiges Flächenhalbzeug Papier verwendet wird, ergeben sich besondere Vorteile insbesondere für die Leichtbautechnik. Papier kann mit einer besonders geringen Dicke bereitgestellt, mit dem Bindemittel getränkt und anschließend der Selbststrukturierung unterzogen werden.

Das erfindungsgemäß in der Strukturierungsschicht verwendete Bindemittel umfasst vorzugsweise ein vernetzbares Polymer, ein Prepolymer, eine Kombination eines vernetzbaren Polymers oder eines Prepolymers mit einem thermoplastischen Material und/oder mit einem elastomeren Material, eine Verbindung mit chemisch reaktionsfähigen Gruppen oder eine Kombination aus diesen.

Gemäß bevorzugten Varianten der Erfindung ist das Bindemittel mindestens einer der nachfolgend genannten Stoffklassen oder deren Kombinationen zuzuordnen: Phenolharze, Melaminharze, Harnstoffharze, Urethane, Isocyanate, Epoxidharze, Acrylate, ungesättigte Polyester, Polyester, Vinylester, Silikonharze bzw. -Kautschuke, Cyanatharze, Bismaleimide, Maleimidharze, Benzoxazine, Perfluorcyclobutane, Biscyclobutane.

Vorteilhafterweise können diese Substanzen durch die Aushärtung der Strukturierungsschicht in einen Duroplast- oder einen Elastomer-Werkstoff mit veränderter Vernetzungsdichte umgesetzt werden, so dass das erfindungsgemäße Kunststoffbauteil mit den jeweils gewünschten mechanischen Eigenschaften von Duroplasten oder Elastomeren ausgestattet sein kann.

Wenn die erfindungsgemäß strukturierte Strukturierungsschicht zusätzlich zu dem Verstärkungsmaterial und dem Bindemittel ein thermoplastisches Polymer enthält, wie z.B. Polyester, Polycarbonat, Polymethacrylat, Polypropylen, Polyethylen können die mechanisch-elastischen Eigenschaften des fertigen Kunststoffbauteils vorteilhafterweise zusätzlich beeinflusst werden.

Bei weiteren Varianten der Erfindung kann vorgesehen sein, dass die Strukturierungsschicht aus einer einzigen Lage der Zusammensetzung aus Verstärkungsmaterial und Bindemittel besteht oder alternativ mehrlagig gebildet ist. Der einlagige Aufbau hat Vorteile insbesondere für den Leichtbau, während der mehrlagige Aufbau vorteilhafterweise die Kombination verschiedener Verstärkungsmaterialien und/oder Bindemittel ermöglicht. In diesem Fall können bestimmte funktionelle Eigenschaften des fertigen Kunststoffbauteils eingestellt werden.

Gemäß einer besonders bevorzugten Ausführungsform der Erfindung umfasst das Strukturierungsverfahren einen kontinuierlichen Prozess, bei dem die Strukturierungsschicht als langgestreckte Materialbahn zwischen umlaufenden Walzen durchgeführt wird, welche die Stütz- und Druckelemente tragen, so dass vorteilhafterweise besonders großflächige Bauteile hergestellt werden können. Zur besonders schonenden Umformung der Strukturierungsschicht kann auf wenigstens einer der Walzen eine elastische Zwischenschicht vorgesehen sein. Vorteilhafterweise wird dadurch verhindert, dass die Strukturierungsschicht mit den typischerweise metallischen Stützelementen in direkte Berührung kommt, so dass die Umformung besonders werkstoffschonend erfolgt. Gleichzeitig werden damit die Konturen (Falten) mit einer besonders sanften Rundung versehen. Weil die Höhe der geometrischen Strukturen aufrechterhalten bleiben kann, wird vorteilhafterweise vermieden, dass es zu Einbußen der hohen Biegesteifigkeit der strukturierten Strukturierungsschicht kommt.

Die Realisierung einer kontinuierlichen Prozessführung stellt einen wesentlichen Vorteil der Erfindung dar. Im Gegensatz zu herkömmlichen Techniken, bei denen eine Verarbeitung von Prepregs stets diskontinuierlich erfolgt, wird erfindungsgemäß erstmalig eine kontinuierliche Formung von Prepregs bereitgestellt.

Gemäß einer weiteren Ausführungsform der Erfindung kann die strukturierte Schicht vor oder nach der Aushärtung einer Nachbearbeitung unterzogen werden, um das fertige erfindungsgemäße Kunststoffbauteil herzustellen. Die Nachbearbeitung umfasst vorzugsweise eine Randbearbeitung, eine Zerlegung in Einzelteile, eine Verbindung mit weiteren Kunststoffbauteilen, eine Beschichtung, die Aushärtung oder eine Kombination aus diesen Verfahren. Zur Randbearbeitung kann vorgesehen sein, dass an der Strukturierungsschicht ein- oder mehrseitig ein ebener (nicht strukturierter) oder feinstrukturierter Rand gebildet wird, der sich auf das Verbinden mit weiteren Strukturierungsschichten, wie z. B. durch mechanisches, thermisches oder chemisches Fügen vorteilhaft auswirkt.

Die Verbindung mit weiteren Kunststoffbauteilen kann die Bildung eines Sandwich-Aufbaus mit mehreren Lagen von übereinander liegenden, z. B. verklebten Materialbahnen aufweist, wobei nur eine oder mehrere innen liegende Kernlagen die erfindungsgemäß gebildete Struktur aufweisen. Es kann ein Verbundaufbau aus mehreren unterschiedlichen Werkstoffen, z. B. aus faserverstärktem Kunststoff und Metall, z. B. Aluminium oder Stahl gebildet werden.

Bevorzugte Anwendungen des Kunststoffbauteils gemäß der Erfindung, das insbesondere mindestens eine versteifte, ausgehärtete Strukturierungsschicht enthält, bestehen bei der Bereitstellung schallabsorbierender Eigenschaften, z. B. in Bauwerken oder Fahrzeugen, im Leichtbau, in der Installationstechnik, z. B. bei der Verkleidung von Rohren oder Kanälen, als thermostabiles Bauteil, als Gehäusebauteil, insbesondere im Fahrzeugbau, zur Crash-Absorption und/oder als Gestaltungselement.

Die Erkenntnisse der Erfinder können mit den folgenden Gesichtspunkten zusammengefasst werden. Erfindungsgemäß wird ein Kunststoffbauteil bereitgestellt, das sich durch eine allseitige (d. h. in mehreren Raumrichtungen der Strukturierungsschicht) Formsteifigkeit und eine besonders materialschonende (insbesondere die Fasern schonende), aus der Ebene der Strukturierungsschicht (in die "dritte Dimension") herausführende dreidimensionale Strukturierung, wobei sich ein hohes Flächenträgheitsmoment ergibt, auszeichnet. Um diese Vorteile zu erreichen, werden die drei folgenden Merkmalskomplexe vorzugsweise zugleich realisiert.
(a) Weil sich textile Flächengebilde (lange Fasern, die durch verschiedene Bindungen miteinander verknüpft sind), insbesondere Kohlefasern, nicht dehnen oder plastifizieren und knicken (oder eng biegen) lassen, und dennoch eine mehrdimensionale Versteifung erzielt werden soll, wird eine so genannte isometrische Umformung bereitgestellt (d. h. der Flächeninhalt wird durch das Strukturieren nicht verändert), die zugleich nur sanfte Biegeradien, dafür aber vergleichsweise tiefe Strukturen (hohes mechanisches Flächenträgheitsmoment) aufweist. Dafür ist eine geometrische Raffung der Strukturierungsschicht aus einer ebenen Fläche in zugleich mehreren Richtungen erforderlich, was mit den herkömmlichen Umformtechniken mittels geometrisch komplexen Werkzeugen in der Regel deshalb nicht möglich ist, weil deren geometrische Konturen das zu-verformende dünnwandige Material beim Umformprozess "einsperren" und dadurch erheblich dehnen. Bei den rissempfindlichen faserverstärkten Kunststoffen ist das nicht möglich. Ferner ist das Bindemittel noch nicht vollständig ausgehärtet, weil Duromere nicht umformbar bzw. plastifizierbar sind.
(b) Die Fasern können sich durch Umorientierungen und Verschränkungen in Mikrodimensionen schonend der mehrdimensional isometrischen Umformung (nach Punkt a) anpassen.
(c) Während der Umformung und Strukturierung wird entlang des zeitlichen chemischen Reaktionsablaufs (Aushärtungsvorgang) ein Andrücken oder Zusammendrücken der Strukturierungsschicht oder eines Schichtaufbaus mit der Strukturierungsschicht aufrechterhalten, um eine Lockerung des Verbundes der Strukturierungsschicht (z. B. infolge Umformung, Kriechverhalten und Relaxation und bei denkbarer Schrumpfung/Gasabspaltung) und ferner Einbußen von der erzeugten geometrischen Steifigkeit (Reduzierung der dritten Dimension) zu verhindern und eine gute Oberflächenbeschaffenheit zu erzeugen. Durch Einstellung der Reaktionsbedingungen werden Einbußen der geometrischen Steifigkeit vermieden.

Überraschenderweise konnten diese drei Merkmalskomplexe mit dem erfindungsgemäßen Verfahren zugleich realisiert werden, indem die Selbststrukturierung (auf der Basis einer kontrollierten Selbstorganisation) unter Ausnutzung der spezifischen Werkstoffeigenschaften des aushärtenden Prepregs (Variablen: Zeit, Temperatur und chemischer Reaktionsumsatz) und mit einer Prozessführung in Kombination mit einem Andrücken und Aushärten auf faserverstärkten Kunststoff angewendet wird.

Mit Hilfe der Selbststrukturierung der dreidimensionalen Strukturierungsformen (primäres Wölbstrukturieren, dreidimensional wellenförmiges Strukturieren, dreidimensional facettenförmiges Strukturieren) kann die Strukturierungsschicht für die Erzeugung der dritten Dimension zugleich in mehreren Richtungen gerafft werden, weil der mittlere Durchmesser der zylindrisch gekrümmten, zunächst glatten (das heißt nichtstrukturierten) Materialbahn durch das "Durchschlagen" (beim Strukturierungsprozeß) etwas kleiner wird, durch die "lichte" (das heißt gemittelte) zylindrische Fläche etwas kleiner wird und auf diese Weise diese frei werdende Differenzfläche für die Erzeugung der mehrdimensionalen Struktur/dritte Dimension zur Verfügung gestellt wird. Dadurch wird die isometrische mehrdimensionale Umformung/Versteifung realisiert, wobei dies vorteilhafterweise sogar ohne aufwendige Formwerkzeuge möglich ist, welche die Strukturierungsschicht dehnen und die Fasern zerreißen würden.

Der mehrdimensionale isometrische Effekt des "Durchschlagens" gelingt mit Hilfe der vorzugsweise metallischen Gurte (Werkstoff im elastischen/plastischen Übergangsbereich) oder auch dann, wenn (ohne Gurte) das nahezu ausgehärtete Prepreg selbst für die Strukturierung sich in einem Vernetzungszustand unmittelbar vor dem Glaszustand befindet. Die Umformung des Prepregs gelingt, da das Bindemittel während der Strukturierung und dem Aushärten vom gummielastischen in den glasartigen Zustand übergeht (Glasübergang). Im letzteren Fall wird die chemische Redaktionszeit entsprechend gewählt, um das oben beschriebene Prozessfenster zu realisieren.

Wegen der isometrischen Umformung (nach a) werden die Fasern von selbst nur umgelagert/ verschränkt, wobei die Viskosität des Bindemittels (Figur 4) im Prozessfenster nicht sehr gering, aber auch nicht zu hoch ist. So wird einerseits ein Wegquetschen oder eine Reduzierung der Wanddicke bei zu dickem oder viskosem Bindemittel verhindert, andererseits wird die Ausrichtung und Verschränkung der Fasern ermöglicht. Insbesondere mit Hilfe der sanft gerundeten Wülste werden diese sehr materialschonend realisiert.

Das Andrücken oder Zusammendrücken der Strukturierungsschicht gemäß (c) gelingt mit Hilfe stützender Maßnahmen, wie Gurten, vorzugsweise aus Metall. Die metallischen Gurte können auf dem fertig ausgehärteten faserverstärkten Kunststoff verbleiben und ergeben als Sandwich ein Endprodukt, beispielsweise für Luftfahrzeuge. Die Gurte können aber auch vorteilhaft nach dem vollständigen Aushärten des Prepregs (Fertigprodukt) wieder abgezogen werden, dann im Kreislauf eines kontinuierlichen Strukturierungsprozesses zurückgeführt und somit wiederverwendet werden (Vermeidung von Ausschuss, wenn die Gurtschichten im Rahmen des Endprodukts nicht mehr benötigt werden). Hierfür werden die strukturierten Gurte (nach dem Abschälen vom ausgehärteten Prepreg) mit Hilfe von glatten Walzen wieder geglättet. Alternativ können Gurte aus anderen Werkstoffen, vorzugsweise im elastisch/plastischen Übergangsverhalten, wie temperaturstabile Thermoplaste oder Gewebeschichten, verwendet werden.

Es wird vorzugsweise ein zeitlich möglichst langer Berührungskontakt zwischen der Strukturierungsschicht und der Strukturierungswalze (vorzugsweise geheizt) realisiert, indem ein möglichst großer Umschlingungsgrad der Strukturierungsschicht um die Strukturierungswalze bei gleichzeitiger kurzer chemischer Reaktionszeit (von wenigen Sekunden) bereitgestellt wird. Ein großer Umschlingungsgrad ist vorzugsweise so gebildet, dass die Strukturierungsschicht um 180° um die Strukturierungswalze gebogen wird, wobei sich die Laufrichtung der Strukturierungsschicht vollständig (zu 180°) umkehrt. Beispielsweise erfolgt ein mittlerer Umschlingungsgrad von 90°, wenn die Strukturierungsschicht um 90° um die Strukturierungswalze gebogen wird. Ein kleiner Umschlingungsgrad von wenigen Graden erfolgt vorzugsweise dann, wenn - insbesondere bei fast ausgehärtetem Prepreg - die Strukturierungsschicht nur noch wenig umgelenkt werden soll. Jedoch soll hierbei der minimale Umschlingungswinkel (beim primären Wölbstrukturieren) vorzugsweise etwa gleich oder größer demjenigen Winkel sein, der sich einstellt, wenn die elastische Druckwalze gegen die Strukturierungsschicht drückt und der Gummiabdruck in Umfangsrichtung gerade einer einzelnen gebildeten Wölbstruktur entspricht. Wenn dieser Gummiabdruck deutlich kleiner ist, sind die Voraussetzungen für die Selbststrukturierung ("Plopp-Effekt" aus der Krümmung) nicht mehr gegeben und es entstehen dann häufig die unerwünschten, geometrisch verzerrten Strukturen.

Gemäß einer weiteren Variante können, falls die Kontaktzeit für die chemische Reaktionszeit an den Strukturierungwalzen nicht ausreicht, bei der Strukturierung mitlaufende, der Struktur angepasste Andruckrollen, Kettenglieder und/oder Elastomerbänder, die im Kreislauf geführt und durch Rollen gestützt werden, mit integrierter Heizung vorgesehen sein.

Das Richten der strukturierten Materialbahn in die Planlage wird wesentlich durch das dreidimensionale wellenförmige Strukturieren erleichtert, weil sich die Strukturierungsschicht beim Strukturieren nicht so eng an die Strukturierungswalze anschmiegt wie beim primären Wölbstrukturieren.

Das Richten der strukturierten Materialbahn in die Planlage wird durch das sekundäre, gegengerichtete Durchschlagen beim dreidimensional facettenförmigen Strukturieren von selbst fast völlig erledigt. Ein Nachrichten in die exakte Ebene der Planlage kann wegen des nicht auszuschließenden Relaxationsverhaltens bei der letzten Endaushärtung/Abkühlung in bestimmten Anwendungsfällen dennoch erforderlich sein.

Weitere Einzelheiten und Vorteile der Erfindung werden im Folgenden unter Bezug auf die beigefügten Zeichnungen beschrieben. Es zeigen:
- Figuren 1A bis 1F:: eine erste Ausführungsform des erfindungsgemäßen Verfahrens zur Selbststrukturierung von Strukturierungsschichten;
- Figur 2:: eine weitere Ausführungsform des erfindungsgemäßen Verfahrens zur Selbststrukturierung von Strukturierungsschichten,
- Figur 3:: Beispiele von Oberflächen strukturierter Kunststoffbauteile gemäß der Erfindung,
- Figur 4:: eine schematische graphische Darstellung der Viskosität des Bindemittels in Abhängigkeit von der Temperatur,
- Figur 5:: eine schematische graphische Darstellung des Elastizitätsmoduls eines gehärteten Prepregs in Abhängigkeit von der Temperatur, und
- Figur 6:: eine weitere Ausführungsform des erfindungsgemäßen Verfahrens zur kontinuierlichen Selbststrukturierung von Strukturierungsschichten.

Ausführungsformen der Erfindung werden im Folgenden unter Bezug auf die erfindungsgemäß verwendeten Materialien und die Besonderheiten beschrieben, die sich aus der Verwendung dieser Materialien für das Verfahren der Selbststrukturierung ergeben. Einzelheiten des Vorgangs der Selbststrukturierung und der hierfür verwendeten Maschinen sind aus dem Stand der Technik bekannt und werden daher hier nicht erläutert. Vielmehr werden insbesondere die WO 94/22612 A1, WO 79/35705 A1, WO 97/39846 A1, DE 102 18 144 A1, DE 10 2005 041 555.5 und DE 10 2005 041 516.4 enthaltenen Merkmale der Werkzeuge und Maschinen zur Selbststrukturierung, der Gestaltung der Stützelemente, der Druckerzeugung und der kontinuierlichen Verfahrensweise und der Verwendung von umlaufenden Walzen durch Bezugnahme in die vorliegende Patentanmeldung einbezogen.

Die in der Strukturierungsschicht erfindungsgemäß gebildete, selbstorganisierte Struktur wird kaum durch Materialeigenschaften, sondern hauptsächlich durch die Geometrie der Selbstorganisation, induziert durch die Geometrie der Stützelemente festgelegt. Entsprechend kann die für die konkrete Anwendung gewünschte Struktur der Strukturierungsschicht maßgeblich durch die Auswahl der Struktur der Stützelemente gewählt werden, wie dies von den herkömmlichen Verfahren zur Selbststrukturierung bekannt ist.

Es wird betont, dass die in den Figuren gezeigten Werkzeuge zur kontinuierlichen Selbststrukturierung von Strukturierungsschichten nicht zwingend zur Umsetzung der Erfindung vorgesehen sind. Das kontinuierliche Verfahren kann durch ein diskontinuierliches Verfahren insbesondere mit Werkzeugen ersetzt werden, welche die Stützelemente und das Druckelement ersetzen. Das Druckelement wird nicht zwingend durch eine elastische Fläche bereitgestellt, sondern kann alternativ durch eine Einrichtung zur Erzeugung eines hydrostatischen oder pneumatischen Druckes (so genanntes Wirkmedium) gebildet werden.

Die Beschreibung erfolgt unter Bezug auf die Variante der Erfindung, bei der die Stützelemente eine selbstorganisierte Wölbung der Strukturierungsschicht auslösen. Die Realisierung der alternativen Variante, bei der die Stützelemente ein Werkzeug mit einer starren geometrischen Werkzeugoberfläche bilden, erfolgt analog.

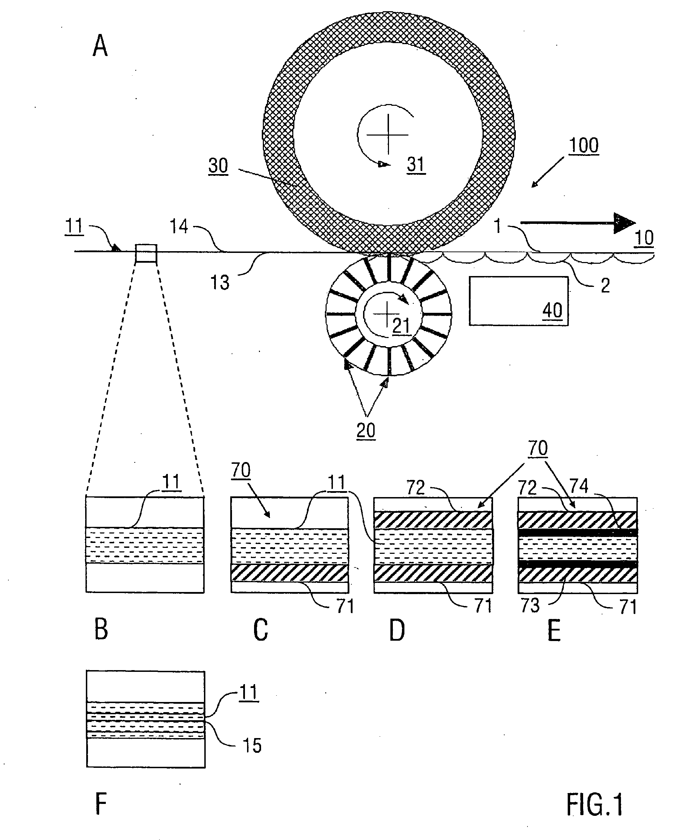

Figur 1A zeigt den schematischen Aufbau einer Vorrichtung 100 zur Herstellung eines strukturierten Kunststoffbauteils 10. Die Vorrichtung 100 weist erste Stützelemente 20, die auf der Mantelfläche einer drehbaren Stützwalze 21 (schematisch dargestellt) angeordnet sind, ein erstes Druckelement 30, das durch die elastische Mantelfläche der Druckwalze 31 gebildet wird, und die Aushärtungseinrichtung 40 (schematisch dargestellt) auf, die in Durchlaufrichtung (siehe Pfeil) der Kombination aus Stütz- und Druckelementen 20, 30 nachgeordnet oder in eine der Walzen 21, 31 integriert ist.

Die Aushärtungseinrichtung 40 umfasst z. B. eine elektrische Konvektions- oder Strahlungsheizung oder, insbesondere bei der Verwendung metallischer Stützschichten (siehe Figur 1D) eine elektrische Induktionsheizung. Es kann z. B. eine in Bandanlagen übliche induktive Heizung verwendet werden, wie sie zum Glühen von Blechen üblich ist. Die Heizleistung wird entsprechend der zum Aushärten erforderlichen Temperatur der Strukturierungsschicht gewählt. Die elektrische Heizung kann ggf. bereits unmittelbar vor dem Eintritt der Strukturierungsschicht 11 zwischen die Walzen 21, 31 erfolgen oder eingeschaltet werden, weil der instationäre Wärmefluss zeitverzögert in die Strukturierungsschicht 11 eindringt. Auf diese Weise kann man in Abhängigkeit von der Transportgeschwindigkeit der Strukturierungsschicht 11 eine Teilaushärtung erreichen und so die Selbststrukturierung der Strukturierungsschicht noch weiter verbessern.

Die Vorrichtung 100 ist vorzugsweise so angeordnet, dass die strukturierte Materialbahn des Kunststoffbauteils 10 sich als wölbstrukturiertes Material eng an die Krümmung der Strukturelemente 20 anschmiegt und besonders bevorzugt die Vorrichtung 100 stark nach unten gebogen verlässt (in der schematischen Darstellung nicht explizit dargestellt). Im Falle der dreidimensional wellenförmigen Strukturierung wird zwischen der Strukturierungsschicht und den Stützelementen 20 eine zusätzliche Elastomerschicht geführt. In diesem Fall verlässt die strukturierte Materialbahn nur schwach nach unten gekrümmt, im Wesentlichen geringfügig vorgerichtet, die Vorrichtung 100.

Die Strukturierungsschicht 11 ist vorzugsweise mit einem ein- oder mehrlagigen Aufbau gebildet und/oder mit weiteren Schichten kombiniert, wie dies schematisch in den Figuren 1B bis 1F illustriert ist.

Gemäß Figur 1B ist eine einzelne, einlagige Strukturierungsschicht 11 vorgesehen, die beispielsweise mit den Merkmalen des Beispielkomplexes 1 (siehe unten) gebildet ist. Die Zusammensetzung und den ggf. vorgesehenen Teilvernetzungsgrad der Strukturierungsschicht 11 wählt der Fachmann entsprechend den Anforderungen der konkreten Anwendung des Kunststoffbauteils.

Gemäß Figur 1C wird die Strukturierungsschicht 11 zwischen die Stütz- und Druckelemente 20, 30 mit einem Schichtaufbau 70 eingeführt, der die Strukturierungsschicht 11 (z. B. gemäß Beispielkomplex 1) und eine (untere) Stützschicht 71 umfasst. Die Stützschicht 71 ist z. B. ein dünnes Edelstahlblech mit einer Dicke von 0,1 mm oder ein Aluminiumblech mit einer Dicke von 0,3 mm.

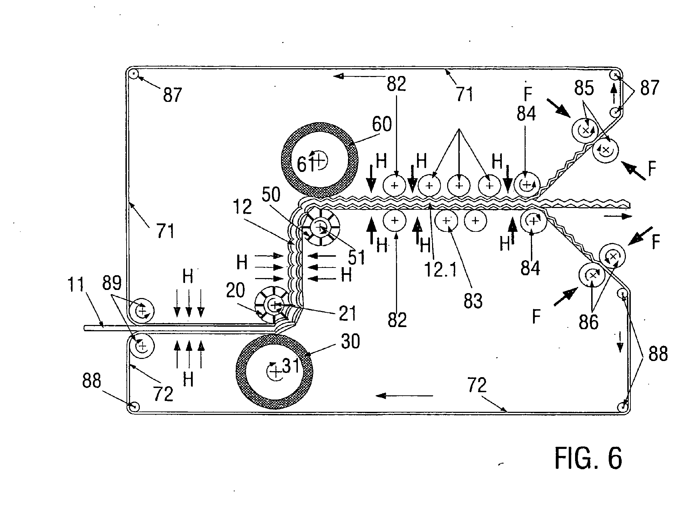

Gemäß Figur 1D ist der Schichtaufbau 70 dahingehend abgewandelt, dass die Strukturierungsschicht 11 beidseitig durch Stützschichten 71, 72 eingebettet ist, wobei zusätzlich eine Schicht 74 mit einem haftmindernden Mittel einseitig oder gemäß Figur 1E beidseitig auf der Strukturierungsschicht 11 vorgesehen sein kann. Die Stützschichten 71, 72 werden insbesondere bei einer kontinuierlichen Prozessführung auch als Gurte bezeichnet (siehe unten, Figur 6). Zur Realisierung der Ausführungsformen gemäß den Figuren 1D und 1E können beispielsweise die in den Beispielkomplexen 2 bis 5 (siehe unten) zusammengestellten Merkmale vorgesehen sein.

Schließlich illustriert Figur 1F ein Beispiel analog zu Figur 1B mit einem mehrlagigen Aufbau der Strukturierungsschicht 11 mit mehreren Einzelschichten 15.

Die Strukturierung der Strukturierungsschicht 11 zur Erzeugung des Kunststoffbauteils 10 erfolgt mit den folgenden Arbeitsschritten. Zunächst wird die Strukturierungsschicht 11 im nicht-ausgehärteten Zustand z. B. gemäß Figur 1D zwischen zwei Metallfolien positioniert und dann als kontinuierliche Materialbahn zwischen den Stütz- und Druckwalzen 21, 31 durchgeführt. Dabei wird die flexible Mantelfläche der Druckwalze 31 an die Stützelemente 20 gedrückt. In einem ersten Arbeitsschritt wird der Schichtaufbau 70 gekrümmt und dabei von innen mit den Stützelementen 20 abgestützt und von außen mit Druck durch das Druckelement 30 beaufschlagt, so dass die metallischen Stützschichten (Metallfolien) 71, 72 wölbstrukturiert werden und wobei die in der Strukturierungsschicht 11 enthaltenen Fasern sich durch einen Reibschluss zwischen den Stützschichten 71, 72 und durch die Einbettung in dem noch nicht ausgehärteten Bindemittel biegeweich und spannungsarm verschieben. Die Stützschichten 71, 72 ermöglichen es dem plastischen oder teilplastischen Verbund der Strukturierungsschicht 11, sich werkstoffschonend bei der Selbststrukturierung relativ zu den Werkzeugflächen der Stützelemente 20 und des Druckelements 30 frei zu bewegen. Vorteilhafterweise werden dadurch scharfe Knicke oder Risse von Fasern vermieden.

Durch den dabei auf die Strukturierungsschicht 11 aufgeprägten'Druck kommt es zum Einspringen der Strukturierungsschicht 11 in den strukturierten Zustand, wobei sich Mulden 2 bilden, die durch Stege 1 voneinander getrennt sind. Die Umformung in den strukturierten Zustand erfolgt, ohne dass die Strukturierungsschicht 11 im Bereich der Mulden 2 eine feste Werkzeugfläche berühren. Die Mulden 2 sind zu der unteren Oberfläche 13 der Strukturierungsschicht 11 weisend gebildet und haben entsprechend eine in Bezug auf die obere Oberfläche 14 konkave Form.

Die Durchlaufgeschwindigkeit der Materialbahn zwischen den Stütz- und Druckwalzen 21, 31 beträgt z. B. 0,1 bis 0,2 m/s, kann aber auch höher oder niedriger eingestellt werden. Die Durchlaufgeschwindigkeit kann insbesondere in Abhängigkeit von der Aushärtgeschwindigkeit des konkret gewählten Kunststoffes eingestellt werden. In einem weiteren Arbeitsschritt, der zeitgleich mit der Selbststrukturierung oder daran anschließend vorgesehen sein kann, erfolgt die integrierte Erwärmung des Schichtaufbaus 70 zum Aushärten des Bindemittels in der Strukturierungsschicht 11.

Noch vor der Aushärtung oder bei geeigneten Materialeigenschaften nach der Aushärtung folgt ein Richten des Schichtaufbaus 70 und ggf. eine Trennung der Stützschichten 71, 72 von der Strukturierungsschicht 11.

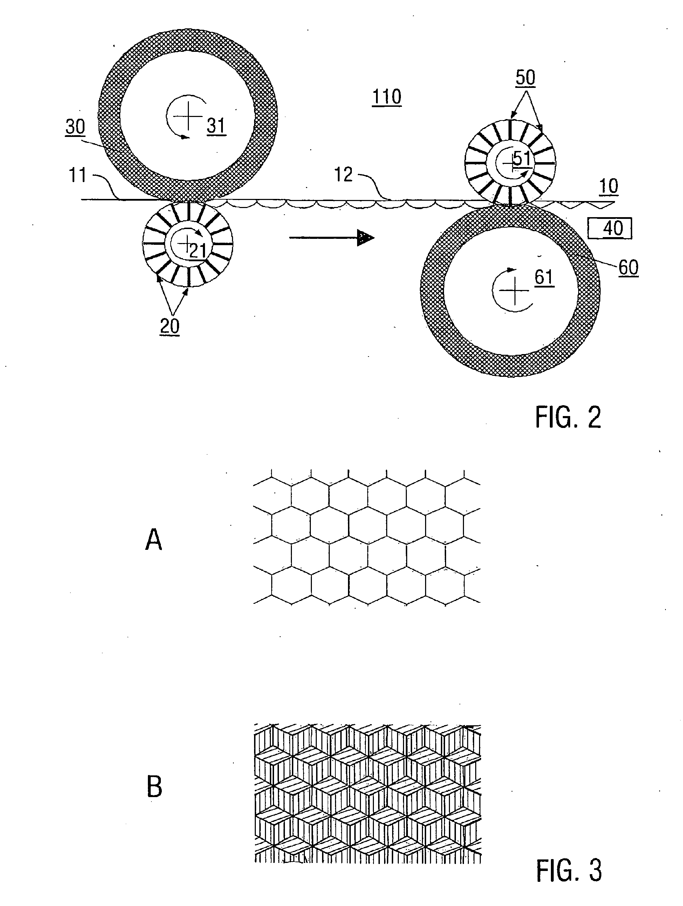

Mit der in Figur 2 gezeigten Vorrichtung 110 wird die Strukturierungsschicht 11 zunächst der Selbststrukturierung zwischen den ersten Stützelementen 20 und dem ersten Druckelement 30 und die dabei dreidimensional strukturierte Strukturierungsschicht 12 anschließend einer Nachstrukturierung unter Verwendung einer weiteren Kombination aus zweiten Stützelementen 50 und einem zweiten Druckelement 60 unterzogen, um das Kunststoffbauteil 10 herzustellen. Einzelheiten der Nachstrukturierung, insbesondere für die dreidimensional facettenförmigen Strukturen, sind in DE 10 2005 041 555.5 oder DE 10 2005 041 516.4 beschrieben. Während die Strukturierungsschicht 12 nach der Wölbstrukturierung zunächst die in Figur 3A gezeigte konkave, hexagonale Struktur aufweist, wird das Kunststoffbauelement 10 nach der Nachstrukturierung mit der in Figur 3B gezeigten, dreidimensionalen Facettenstruktur gebildet. Die dreidimensionalen Facettenstrukturen entstehen geometrisch vorzugsweise dadurch, dass jeweils drei zu einem Sternpunkt zusammenlaufenden Stützelemente 50 (in der Ansicht von Fig. 2 nicht explizit dargestellt) gegen die konkave Seite jeweils einer Mulde 2 bzw. Kalotte der strukturierten Schicht 12 drücken und die sekundäre Strukturierung auslösen. Die in den Figuren 3A und 3B dargestellten hexagonalen bzw. dreidimensional facettenförmigen Strukturen weisen gerade Falten oder Stege auf. Diese Falten oder Stege können gemäß einer abgewandelten Ausführungsform der Erfindung eine geschwungene Form besitzen.

Figur 3A stellt die Draufsicht auf die wölbstrukturierte Materialbahn dar, wobei Falten als schmale Striche sichtbar gemacht sind. Bei den Wülsten der dreidimensional wellenförmigen Strukturen würde sich eine Darstellung ergeben, bei der die Striche entsprechend den breiter ausgeformten Stützelementen breiter gebildet sind. Bei Figur 3B können anstatt der sichtbaren Falten (schmale Striche) alternativ die dreidimensionalen Facetten mit Wülsten (breite Striche) gebildet sein.

Gemäß der o. g. ersten Ausführungsvariante geht das Bindemittel des Pregregs während der Strukturierung mit gleichzeitiger Aushärtung vom gummielastischen in den glasartigen Zustand über (beschrieben in den Figuren 4 und 5).

Figur 4 zeigt schematisch die Viskosität des Bindemittels im Prepreg in Abhängigkeit von der Temperatur, dem Reaktions-Umsatz und von der Zeit, wobei die Größen Temperatur und Zeit mit dem spezifischen Reaktions-Umsatz des aushärtenden Prepregs verknüpft sind. Zunächst nimmt die Viskosität mit zunehmender Temperatur ab. Erst rechts vom senkrechten Strich steigt die Viskosität steil an, weil vor Erreichen des Gelpunktes die Vernetzung der Moleküle deutlich zunimmt. Das Prepreg ist vor der Strukturierung im teilweise ausgehärteten Zustand, d. h. der Aushärtungszustand des Bindemittels befindet sich vor dem Prozessfenster. Die Strukturierung mit weiterer Aushärtung findet im Prozessfenster statt, wo eine Umformung des Prepregs vorteilhaft ist.

Figur 5 zeigt schematisch den Elastizitätsmodul der Strukturierungsschicht im ausgehärteten Zustand. Mit ansteigender Temperatur nimmt der Elastizitätsmodul stark ab. Deshalb verhält sich die ausgehärtete Strukturierungsschicht bei hohen Temperaturen (oberhalb des Glaspunktes) im Wesentlichen "kautschukartig".

Figur 6 zeigt schematisch eine weitere Ausführungsform des erfindungsgemäßen zweistufigen Verfahrens zur Selbststrukturierung einer Wölbstruktur und einer dreidimensional facettenförmigen Struktur in einem kontinuierlichen Herstellungsprozess. Die zugeführte Strukturierungsschicht (Prepreg 11) wird an Umlenkrollen 89 auf der Oberseite mit einem oberen Gurt 71 und auf seiner Unterseite mit einem unteren Gurt 72 umschlossen. Die Gurte 71, 72 bilden Stützschichten (siehe oben, Figuren 1D, E) und bestehen vorzugsweise aus dünnem Metallband, beispielsweise aus einem Edelstahlband mit einer Dicke von etwa 0,1 mm. Der Schichtaufbau aus oberem Gurt 71, Strukturierungsschicht 11 und unterem Gurt 72 wird dann einer ersten Strukturierungseinheit, bestehend aus der Stützelementwalze 21 und den Stützelementen 20 sowie der Druckwalze 31 mit der Elastomerschicht 30 zugeführt. Vor der Zuführung zu der ersten Strukturierungseinheit kann eine Temperierung des Schichtaufbaus (Zufuhr von Wärme mit Heizvorrichtungen H, insbesondere Heizstrahlern oder induktiven Strahlern), vorgesehen sein, um die Temperatur des Prepregs im gewünschten Prozessfenster einzustellen.

Durch Druckbelastung der ersten Strukturierungseinheit springen Wölbungen in die Strukturierungsschicht 11 ein. Im Ergebnis wird die strukturierte Strukturierungsschicht 12 erzeugt. Die Reaktionstemperatur kann zusätzlich durch die beheizte Druckelementwalze 21 und/oder durch die Heizvorrichtungen H reaktionsspezifisch eingestellt werden. Alternativ kann in der ersten Strukturierungseinheit eine dreidimensional wellenförmige Struktur in der Strukturierungsschicht erzeugt werden, indem zusätzlich zwischen der Oberseite der Strukturierungsschicht und den Stützelementen 20 eine Elastomerschicht (in Figur 6 nicht gezeigt) geführt wird oder indem die Stützelemente 20 mit einer derartigen Kontur ausgestattet sind, wie sie sich aus der Selbststrukturierung der Wülste bei der dreidimensional wellenförmigen Strukturierung ergeben würde.

Anschließend wird die strukturierte Strukturierungsschicht 12 der Nachstrukturierung (Sekundärstrukturierung) and der zweiten Strukturierungseinheit, bestehend aus der Stützelementwalze 51 und ihren Stützelementen 50 sowie der Druckwalze 61 mit der Elastomerschicht 60 zugeführt. Hierbei ist besonders bevorzugt vorgesehen, dass sich das Prepreg noch im Prozessfenster befindet, so dass vorteilhafterweise die weitere Strukturierung vollständig und effektiv erfolgen kann und die Gefahr vermindert oder ausgeschlossen wird, dass Fasern reißen oder der enge Materialverbund sich löst. Durch Druckbeaufschlagung entstehen vorzugsweise die dreidimensional facettenförmigen Strukturen 12.1 (Figur 3B).

Gemäß Figur 6 wird die Anordnung der Strukturierungswalzen 21 und 51 so gewählt, dass ein großer Umschlingungswinkel entsteht. Alternativ kann die Anordnung der Walzen 51 und 61 auch so gewählt werden, dass die Strukturierungsschicht ohne weitere Umlenkung, d. h. gerichtet (analog zur Figur 2), die Strukturierungsvorrichtung verlässt (in Figur 6 nicht explizit gezeigt).

Erfindungsgemäß können bei der Strukturierung mitlaufende, der Struktur angepasste Andruckrollen, Kettenglieder und/oder Elastomerbänder, die im Kreislauf geführt und durch Rollen gestützt werden, vorgesehen sein, wie prozessabwärts nach der zweiten Strukturierungseinheit gezeigt ist. Druckrollen 82 halten den Verbund mit den Strukturen 12.1 zusammen, selbst wenn zwecks Endaushärtung noch Heizenergie mit einer Heizvorrichtung H von außen zugeführt werden soll. Mit Hilfe von Richtrollen 83 wird die nahezu ausgehärtete Strukturierungsschicht in die Planlage gebracht. Anschließend werden der obere Gurt 71 und der untere Gurt 72 von der ausgehärteten Strukturierungsschicht abgezogen (abgeschält), mit Hilfe von Umlenkrollen 84 umgelenkt und glatten Planierungswalzen 85, 86, die mit einer Kraft F gegen die strukturierten Gurte drücken, zugeführt. Im eingeebneten Zustand werden der obere Gurt 71 über die oberen Umlenkrollen 87 und der untere Gurt 72 über die unteren Umlenkrollen 88 zurückgeführt.

Um die Trennung der Gurte von der Strukturierungsschicht zu erleichtern, kann eine Trennschicht beispielsweise aus PP (Polypropylen), PVF (Polyvinylfluorid) oder eine elastische Schicht auf der Ober- und Unterseite der Strukturierungsschicht durch den Prozess mitgeführt werden. Dabei kann die elastische Trennschicht die möglichen Restunebenheiten der geglätteten Gurte ausgleichen, um eine gute Oberfläche der Strukturierungsschicht zu gewährleisten. Alternativ können die Gurte mit einem Trennmittel versehen sein.

Die Ausführungsform des in Figur 6 gezeigten erfindungsgemä-ßen zweistufigen Verfahrens kann dahingehend abgewandelt werden, dass die Strukturierung ohne die Gurte erfolgt. In diesem Fall erfolgt die Aushärtung mit einer ersten Teilaushärtung an der ersten Strukturierungseinheit und einer zweiten Teilaushärtung an der zweiten Strukturierungseinheit, wobei sich in beiden Fällen das Prepreg in einem Zustand im oben beschriebenen Prozessfenster befindet. In diesem Fall kann auf die nachgeordneten Andruckrollen, Kettenglieder oder Elastomerbänder und Heizungen verzichtet werden. Vorteilhaft ist in diesem Fall ein geringer Umschlingungswinkel oder sogar der Umschlingungswinkel von etwa Null.

Die Anwendbarkeit des Wölbstrukturierens auf Strukturierungsschichten bestehend aus einem Fasermaterial und einem vernetzbaren Bindemittel wurde mit den folgenden Beispielen demonstriert.

### Beispielkomplex 1

Zuerst wurde aus einem Fasermaterial und einem ungesättigten Polyester ein Prepreg des Formats 21 * 30 mm² hergestellt. Auf dieses Prepreg wurde der Wölbstrukturierungsprozess, z. B. gemäß Figur 1 angewendet. Dabei wurden Wölbstrukturen mit einer typischen Strukturgröße von 33 mm erzeugt. Die Aushärtung des Prepregs erfolgte unmittelbar beim oder nach dem Richten der wölbstrukturierten Schicht des Kunststoffbauteils 10.

### Beispiel 1.1

Als Fasermaterial wurde Glasfasergewebe mit Atlasbindung 1/7 verwendet. Das Prepreg hat eine mittlere Dicke von ca. 0,3 mm.

### Beispielkomplex 2

Zunächst wurde aus einem Fasermaterial und einem Reaktivharz ein Prepreg im Format 21 * 30 mm², mit einer mittleren Dicke von 0,3 mm, hergestellt. Im Folgenden wurde das Prepreg zwischen zwei mit Trennmittel behandelte Aluminiumbleche (AlMg3 bzw. A199,5 - 0,3 mm dick) gelegt und dann dem Wölbstrukturierungsprozess zugeführt. Dabei wurden Wölbstrukturen mit 33 mm und 17 mm Strukturgröße erzeugt. Anschließend wurde das strukturierte Prepreg thermisch ausgehärtet und die Bleche entfernt. Für die Beispiele 2 bis 5 wurden modifizierte Cyanatharze verwendet.

### Beispiel 2.1

Als Fasermaterial kam Glasfasergewebe verschiedenen Flächengewichts mit Atlasbindung 1/7 zum Einsatz. Der Harzgehalt der Prepregs variierte zwischen 31-48 %. An den ausgehärteten wölbstrukturierten glasfaserverstärkten Strukturierungsschichten wurden Biegesteifigkeiten mittels 3-Punkt-Biegeversuch im Vergleich zu ebenen Referenzschichten (unstrukturierte glasfaserverstärkte Strukturierungsschichten) der selben Zusammensetzung bestimmt. Die Biegesteifigkeiten der wölbstrukturierten glasfaserverstärkten Strukturierungsschichten sind gegenüber den ebenen Referenzschichten um den Faktor 4 bis 5 größer.

### Beispiel 2.2

Als Fasermaterial wurden Glasfaservliese verschiedenen Flächengewichts eingesetzt. Der Harzgehalt der Prepregs lag zwischen 50-60 %.

### Beispiel 2.3

Als Verstärkungsmaterialien wurden Papiere verschiedenen Flächengewichts benutzt. Die Prepregs wiesen Harzgehalte von ca. 40-60 % auf.

### Beispiel 2.4

Als Fasermaterial wurden Hanfgewebe verschiedenen Flächengewichts eingesetzt. Der Harzgehalt der Prepregs variierte zwischen 30-60 %.

### Beispiel 2.5

Als Fasermaterial kamen Gestricke aus Nomexfasern mit verschiedenen Flächengewichten zum Einsatz. Die Prepregs wiesen Harzgehalte von 60-70 % auf.

### Beispiel 2.6

Es wurden Phenolharzprepregs mit Glasfasergewebe in Atlasbindung 1/7 als Verstärkungsmaterial benutzt. Die Prepregs wiesen Harzgehalte von ca. 30-70 % auf.

### Beispielkomplex 3

Aus einem Fasermaterial und einem Reaktivharz wurde ein Prepreg im Format 21 * 30 mm² mit einer mittleren Dicke von 0,3 mm hergestellt. Danach wurde das Prepreg zwischen zwei mit Trennmittel behandelte Aluminiumbleche (AlMg3 bzw. A199,5 - 0,3 mm dick) gelegt und dann dem Wölbstrukturierungsprozess zugeführt. Die Aushärtung der Prepregs erfolgte unmittelbar beim oder nach dem Richten der wölbstrukturierten Teile. Es wurden Wölbstrukturen mit 33 mm und 17 mm Strukturgröße erzeugt. Für das Beispiel 1 wurden modifizierte Cyanatharze verwendet.

### Beispiel 3.1

Als Fasermaterial kam Glasfasergewebe verschiedenen Flächengewichts mit Atlasbindung 1/7 zum Einsatz.

### Beispielkomplex 4

Aus einem Fasermaterial und einem Reaktivharz wurde ein Prepreg im Format 21 * 30 mm² mit einer mittleren Dicke von 0,3 mm hergestellt. Danach wurde jedes einzelne Prepreg zwischen zwei Aluminiumbleche (AlMg3 bzw. A199,5 - 0,3 mm dick) gelegt, wobei nur eines der Bleche mit Trennmittel behandelt war, und dann dem Wölbstrukturierungsprozess zugeführt. Nach der anschließenden Aushärtung wurde das mit Trennmittel behandelte Blech von dem "Sandwich" entfernt. Es entstand auf diese Weise ein wölbstrukturierter Verbund aus Metall und einer faserverstärkten Strukturierungsschicht mit einer Wölbstrukturgröße von 33 mm. Für das Beispiel 1 wurden modifizierte Cyanatharze verwendet.

### Beispiel 4.1

Als Fasermaterial kam Glasfasergewebe verschiedenen Flächengewichts mit Atlasbindung 1/7 zum Einsatz.

## Patentansprüche

1. Verfahren zur Herstellung eines Kunststoffbauteils (10), mit den Schritten:
- Bereitstellung einer Strukturierungsschicht (11, 12) zwischen ersten Stützelementen (20) und einem ersten Druckelement (30), und
- Wölbstrukturierung der Strukturierungsschicht (11, 12), wobei die Wölbstrukturierung der Strukturierungsschicht (11, 12) die Schritte umfasst:
- Abstützung der Strukturierungsschicht (11, 12) auf einer ersten Oberfläche (13) durch die ersten Stützelemente (20), und
- Druckbeaufschlagung der Strukturierungsschicht (11, 12) auf der gegenüber liegenden zweiten Oberfläche (14) zwischen den ersten Stützelementen (20) durch das erste Druckelement (30), so dass sich in der Strukturierungsschicht (11, 12) zwischen den ersten Stützelementen (20) Wölbungen (2) einer durch Selbstorganisation gebildeten Wölbstruktur ausbilden,
**dadurch** gekenntzeichnet, dass
- die Strukturierungsschicht (11, 12) eine Zusammensetzung aus einem Verstärkungsmaterial und einem vernetzbaren Bindemittel enthält, und
- eine Aushärtung der Strukturierungsschicht (11, 12) während oder nach der Wölbstrukturierung vorgesehen ist.

2. Verfahren nach Anspruch 1, bei dem die Strukturierungsschicht (12) nach der Wölbstrukturierung zwischen zweiten Stützelementen (50) und einem zweiten Druckelement (60) angeordnet und einer Nachstrukturierung durch eine Druckbeaufschlagung der Strukturierungsschicht (12) unterzogen wird.

3. Verfahren nach Anspruch 2, bei dem die Nachstrukturierung in Bezug auf die vorhergehende Wölbstrukturierung mit umgekehrter Orientierung erfolgt.

4. Verfahren nach mindestens einem der vorhergehenden Ansprüche, bei dem die Wölbstrukturierung und/oder die Nachstrukturierung durch die Druckbeaufschlagung mittels Selbstorganisation der Strukturierungsschicht (11, 12) erfolgt.

5. Verfahren nach mindestens einem der Ansprüche 1 bis 3, bei dem die ersten oder zweiten Stützelemente (20, 50) eine Geometrie entsprechend einer durch Selbstorganisation gebildeten Wölbstruktur aufweisen und die Wölbstrukturierung durch die Druckbeaufschlagung mittels Formung der Strukturierungsschicht (11, 12) durch die ersten oder zweiten Stützelemente (20, 50) erfolgt.

6. Verfahren nach Anspruch 2, bei dem die Aushärtung der Strukturierungsschicht (12) während oder nach der Nachstrukturierung vorgesehen ist.

7. Verfahren nach mindestens einem der vorhergehenden Ansprüche, bei dem die Aushärtung durch eine thermische und/oder eine strahlenchemische Behandlung der Strukturierungsschicht (11, 12) erfolgt.

8. Verfahren nach mindestens einem der vorhergehenden Ansprüche, bei dem die Aushärtung einen Übergang der Zusammensetzung aus dem Verstärkungsmaterial und dem Bindemittel von einem gummielastischen in einen glasartigen Zustand umfasst.

9. Verfahren nach mindestens einem der vorhergehenden Ansprüche, bei dem die Bereitstellung der Strukturierungsschicht (11) eine Anordnung ausschließlich der Strukturierungsschicht (11) zwischen den ersten Stützelementen (20) und dem ersten Druckelement (30) umfasst.

10. Verfahren nach mindestens einem der Ansprüche 1 bis 7, bei dem die Bereitstellung der Strukturierungsschicht (11) eine Anordnung eines Schichtaufbaus (70), der die Strukturierungsschicht (11) und mindestens eine Stützschicht (71, 72) enthält, zwischen den ersten Stützelementen (20) und dem ersten Druckelement (30) umfasst, wobei die Wölbstrukturierung und/oder die Nachstrukturierung durch die Druckbeaufschlagung mittels Selbstorganisation der mindestens einen Stützschicht (71, 72) und/oder der Strukturierungsschicht (11, 12) erfolgt.

11. Verfahren nach Anspruch 10, bei dem der Schichtaufbau (70) eine erste Stützschicht (71), die Strukturierungsschicht (11) und eine zweite Stützschicht (72) umfasst.

12. Verfahren nach Anspruch 10 oder 11, bei dem die mindestens eine Stützschicht mindestens eine Metallschicht und/oder mindestens eine Kunststofffolie umfasst.

13. Verfahren nach Anspruch 12, bei dem die Metallschicht Stahl- oder Aluminiumblech umfasst.

14. Verfahren nach Anspruch 12 oder 13, bei dem zur Aushärtung der Strukturierungsschicht eine induktive Aufheizung der mindestens einen Metallschicht vorgesehen ist.

15. Verfahren nach mindestens einem der Ansprüche 10 bis 14, bei dem die mindestens eine Stützschicht (71, 72) gelocht ist.

16. Verfahren nach mindestens einem der Ansprüche 10 bis 15, bei dem auf der Strukturierungsschicht (11) oder der mindestens einen Stützschicht (71, 72) mindestens einseitig ein haftverminderndes Mittel (73, 74) aufgebracht wird.

17. Verfahren nach mindestens einem der Ansprüche 10 bis 16, bei dem die Anordnung des Schichtaufbaus (70) eine Zusammenführung von oberen und unteren Gurten (71, 72), welche die Stützschichten bilden, und der Strukturierungsschicht (11) umfasst.

18. Verfahren nach Anspruch 17, bei dem die Gurte (71, 72) nach der Wölbstrukturierung oder der Nachstrukturierung einer Glättung unterzogen und für einen kontinuierlichen Prozess zur Anordnung des Schichtaufbaus (70) zugeführt werden.

19. Verfahren nach mindestens einem der vorhergehenden Ansprüche, bei dem das Fasermaterial Naturfasern oder synthetische Fasern enthält.

20. Verfahren nach Anspruch 19, bei dem als Fasern Zellulosefasern, Glasfasern, Textilfasern und/oder Kohlefasern verwendet werden.

21. Verfahren nach mindestens einem der vorhergehenden Ansprüche, bei dem als Fasermaterial textile Flächenhalbzeuge verwendet werden.

22. Verfahren nach mindestens einem der vorhergehenden Ansprüche, bei dem als vernetzbares Bindemittel verwendet wird:
(a) ein vernetzbares Polymer,
(b) ein Prepolymer,
(c) eine Kombination eines vernetzbaren Polymers oder eines Prepolymers mit einem thermoplastischen Material,
(d) eine Kombination eines vernetzbaren Polymers oder eines Prepolymers mit einem elastomeren Material,
(e) eine Verbindung mit chemisch reaktionsfähigen Gruppen,
oder
(f) eine Kombination aus mindestens zwei Bindemitteln gemäß (a) bis (e).

23. Verfahren nach Anspruch 22, bei dem als vernetzbares Bindemittel mindestens eine Substanz verwendet wird, die aus der Gruppe ausgewählt ist, die Phenolharze, Melaminharze, Harnstoffharze, Urethane, Isocyanate, Epoxidharze, Acrylate, ungesättigte Polyester, Polyester, Vinylester, Silikonharze bzw. -Kautschuke, Cyanatharze, Bismaleimide, Maleimidharze, Benzoxazine, Perfluorcyclobutane und Biscyclobutane umfasst.

24. Verfahren nach mindestens einem der vorhergehenden Ansprüche, bei dem die Aushärtung eine Umsetzung der Strukturierungsschicht zu einem Duroplast oder zu einem Elastomeren umfasst.

25. Verfahren nach mindestens einem der vorhergehenden Ansprüche, bei dem eine mehrlagige Strukturierungsschicht (15) der Wölbstrukturierung unterzogen wird.

26. Verfahren nach mindestens einem der vorhergehenden Ansprüche, bei dem die Strukturierungsschicht (11, 12) eine Materialbahn umfasst und die Bereitstellung und Wölbstrukturierung der Strukturierungsschicht (11, 12) kontinuierlich erfolgen, wobei die ersten Stützelemente (20) auf der Mantelfläche einer drehbaren Stützwalze (21) angeordnet sind, während das erste Druckelement (30) durch eine elastische Mantelfläche einer Druckwalze (31) gebildet wird und wobei die Strukturierungsschicht (11, 12) zur Wölbstrukturierung zwischen der Stützwalze (21) und der Druckwalze (31) durchgeführt wird.

27. Verfahren nach mindestens einem der vorhergehenden Ansprüche, bei dem zwischen der Strukturierungsschicht (11, 12) und mindestens einem der ersten oder zweiten Stützelemente (20, 50) und ersten oder zweiten Druckelemente (30, 60) eine elastische Zwischenschicht angeordnet wird.

28. Verfahren nach mindestens einem der vorhergehenden Ansprüche, bei dem die Strukturierungsschicht (11, 12) einer Nachbearbeitung unterzogen wird, die mindestens eines einer Umformung, einer Teilung, einer Verbindung mit einer weiteren Strukturierungsschicht, einer Randbearbeitung und einer Beschichtung umfasst.

29. Verfahren nach mindestens einem der vorhergehenden Ansprüche, bei dem die Zusammensetzung aus dem Verstärkungsmaterial und dem vernetzbaren Bindemittel ein Prepreg umfasst.

30. Kunststoffbauteil, das eine Strukturierungsschicht mit einer durch Selbstorganisation gebildeten Wölbstruktur der Strukturierungsschicht aufweist,
**dadurch gekennzeichnet, dass** die Strukturierungsschicht eine Zusammensetzung aus einem Verstärkungsmaterial und einem vernetzten Bindemittel umfasst.

31. Kunststoffbauteil nach Anspruch 30, bei dem das Verstärkungsmaterial Naturfasern oder synthetische Fasern umfasst.

32. Kunststoffbauteil nach Anspruch 31, bei dem das Fasermaterial Zellulosefasern, Glasfasern, Textilfasern und/oder Kohlefasern umfasst.

33. Kunststoffbauteil nach mindestens einem der Ansprüche 30 bis 32, bei dem das Fasermaterial textile Flächenhalbzeuge umfasst.

34. Kunststoffbauteil nach mindestens einem der Ansprüche 30 bis 33, bei dem das Kunststoffbauteil einen Duroplast oder ein Elastomer enthält.

35. Kunststoffbauteil nach mindestens einem der Ansprüche 30 bis 34, bei dem die Strukturierungsschicht einlagig ist.

36. Kunststoffbauteil nach mindestens einem der Ansprüche 30 bis 36, bei dem die Strukturierungsschicht mehrlagig ist.

37. Kunststoffbauteil nach Anspruch 36, bei dem die Strukturierungsschicht ein thermoplastisches Polymer enthält.

38. Kunststoffbauteil nach mindestens einem der Ansprüche 30 bis 37, das einen Sandwich-Aufbau mit mehreren Lagen von übereinander liegenden Materialbahnen aufweist, wobei nur eine oder mehrere innen liegende Kernlagen eine Wölbstruktur aufweisen.

39. Kunststoffbauteil nach Anspruch 38, das einen Verbundaufbau aus mehreren unterschiedlichen Werkstoffen aufweist.

40. Kunststoffbauteil nach Anspruch 39, das einen Verbundaufbau aus Kunststoff und Metall aufweist.

41. Verwendung eines Kunststoffbauteils, das mit einem Verfahren nach mindestens einem der Ansprüche 1 bis 29 hergestellt ist, oder eines Kunststoffbauteils nach mindestens einem der Ansprüche 30 bis 40 als:
- schallabsorbierendes Bauteil,
- Leichtbauwand,
- Installationsbauteil, insbesondere für Rohre oder Kanäle,
- thermostabiles Bauteil zum Einsatz unter Temperaturwechselbelastungen,
- Gehäusebauteil für Maschinen und Fahrzeuge, insbesondere Luft-, Schienen- oder Raumfahrzeuge,
- schlagabsorbierendes Bauteil, und/oder
- Gestaltungselement, insbesondere mit blendmindernder Wirkung.

## Claims

1. A method for producing a plastic component (10), comprising the steps of:
- providing a structuring layer (11, 12) between first supporting elements (20) and a first pressure element (30), and
- vault-structuring the structuring layer (11, 12), wherein the vault-structuring of the structuring layer (11, 12) comprises the steps of:
- supporting the structuring layer (11, 12) on a first surface (13) by the first supporting elements (20), and
- applying pressure to the structuring layer (11, 12) on the opposing, second surface (14) between the first supporting elements (20) by the first pressure element (30), such that vaults (2) of a vault structure established by self-organisation form in the structuring layer (11, 12) between the first supporting elements (20),
**characterized in that**
- the structuring layer (11, 12) contains a composition prepared from a reinforcing material and a crosslinkable binder, and
- curing of the structuring layer (11, 12) is provided during or after the vault-structuring.

2. The method according to claim 1, in which, after the vault-structuring, the structuring layer (12) is arranged between second supporting elements (50) and a second pressure element (60) and subjected to post-structuring by applying pressure to the structuring layer (12).

3. The method according to claim 2, in which the post-structuring proceeds with an inverse orientation with regard to the preceding vault-structuring.

4. The method according to at least one of the preceding claims, in which the vault-structuring and/or the post-structuring by applying pressure proceeds by means of self-organisation of the structuring layer (11, 12).

5. The method according to at least one of claims 1 to 3, in which the first or second supporting elements (20, 50) exhibit a geometry corresponding to a vault structure formed by self-organisation and the vault-structuring proceeds by applying pressure by means of forming the structuring layer (11, 12) by the first or second supporting elements (20, 50).

6. The method according to claim 2, in which the curing of the structuring layer (12) is provided during or after post-structuring.

7. The method according to at least one of the preceding claims, in which the curing proceeds by a thermal and/or radiation-chemical treatment of the structuring layer (11, 12).

8. The method according to at least one of the preceding claims, in which the curing comprises a transition of the composition made of the reinforcing material and the binder from a rubber-elastic to a vitreous state.

9. The method according to at least one of the preceding claims, in which providing the structuring layer (11) comprises arranging solely the structuring layer (11) between the first supporting elements (20) and the first pressure element (30).

10. The method according to at least one of claims 1 to 7, in which providing the structuring layer (11) comprises arranging a layer structure (70), which contains the structuring layer (11) and at least one supporting layer (71, 72), between the first supporting elements (20) and the first pressure element (30), wherein the vault-structuring and/or post-structuring proceed by applying pressure by means of self-organisation of the at least one supporting layer (71, 72) and/or of the structuring layer (11, 12).

11. The method according to claim 10, in which the layer structure (70) comprises a first supporting layer (71), the structuring layer (11) and a second supporting layer (72).

12. The method according to claim 10 or claim 11, in which the at least one supporting layer comprises at least one metal layer and/or at least one plastic film.

13. The method according to claim 12, in which the metal layer comprises steel sheet or aluminium sheet.

14. The method according to claim 12 or claim 13, in which inductive heating of the at least one metal layer is provided for curing the structuring layer.

15. The method according to at least one of claims 10 to 14, in which the at least one supporting layer (71, 72) is perforated.

16. The method according to at least one of claims 10 to 15, in which an adhesion-reducing agent (73, 74) is applied onto at least one side of the structuring layer (11) or of the at least one supporting layer (71, 72).

17. The method according to at least one of claims 10 to 16, in which arranging the layer structure (70) comprises bringing together upper and lower belts (71, 72), which form the supporting layers, and the structuring layer (11).

18. The method according to claim 17, in which, after the vault-structuring or the post-structuring, the belts (71, 72) are smoothed and supplied to a continuous process for arranging the layer structure (70).

19. The method according to at least one of the preceding claims, in which the fibre material contains natural fibres or synthetic fibres.

20. The method according to claim 19, in which cellulose fibres, glass fibres, textile fibres and/or carbon fibre are used as the fibres.

21. The method according to at least one of the preceding claims, in which semi-finished textiles are used as the fibre material.

22. The method according to at least one of the preceding claims, in which the crosslinkable binder used is:
(a) a crosslinkable polymer,
(b) a prepolymer,
(c) a combination of a crosslinkable polymer or of a prepolymer with a thermoplastic material,
(d) a combination of a crosslinkable polymer or of a prepolymer with an elastomeric material,
(e) a compound with chemically reactive groups, or
(f) a combination of at least two binders according to (a) to (e).

23. The method according to claim 22, in which the crosslinkable binder used is at least one substance which is selected from the group which comprises phenolic resins, melamine resins, urea resins, urethanes, isocyanates, epoxy resins, acrylates, unsaturated polyesters, polyesters, vinyl esters, silicone resins or rubbers, cyanate resins, bismaleimides, maleimide resins, benzoxazines, perfluorocyclobutanes and biscyclobutanes.

24. The method according to at least one of the preceding claims, in which the curing comprises a reaction of the structuring layer to yield a thermoset or an elastomer.

25. The method according to at least one of the preceding claims, in which a multi-ply structuring layer (15) is subjected to the vault-structuring.

26. The method according to at least one of the preceding claims, in which the structuring layer (11, 12) comprises a material web and the provision and vault-structuring of the structuring layer (11, 12) proceed continuously, wherein the first supporting elements (20) are arranged on the circumferential surface of a rotatable supporting roller (21), while the first pressure element (30) is formed by a resilient circumferential surface of a pressure roller (31) and wherein the structuring layer (11, 12) is passed for vault-structuring between the supporting roller (21) and the pressure roller (31).

27. The method according to at least one of the preceding claims, in which a resilient interlayer is arranged between the structuring layer (11, 12) and at least one of the first or second supporting elements (20, 50) and first or second pressure elements (30, 60).

28. The method according to at least one of the preceding claims, in which the structuring layer (11, 12) is subjected to post-processing which comprises at least one of forming, division, joining with a further structuring layer, edging and coating.

29. The method according to at least one of the preceding claims, in which the composition prepared from the reinforcing material and the crosslinkable binder comprises a prepreg.

30. A plastic component which comprises a structuring layer with a vault structure, formed by self-organisation, of the structuring layer,
**characterized in that** the structuring layer comprises a composition prepared from a reinforcing material and a crosslinked binder.

31. The plastic component according to claim 30, in which the reinforcing material comprises natural fibres or synthetic fibres.

32. The plastic component according to claim 31, in which the fibre material comprises cellulose fibres, glass fibres, textile fibres and/or carbon fibres.

33. The plastic component according to at least one of claims 30 to 32, in which the fibre material comprises semi-finished textiles.

34. The plastic component according to at least one of claims 30 to 33, in which the plastic component contains a thermoset or an elastomer.

35. The plastic component according to at least one of claims 30 to 34, in which the structuring layer is single ply.

36. The plastic component according to at least one of claims 30 to 36, in which the structuring layer is multi-ply.

37. The plastic component according to claim 36, in which the structuring layer contains a thermoplastic polymer.

38. The plastic component according to at least one of claims 30 to 37 which has a sandwich structure comprising a plurality of plies of material webs lying one upon the other, wherein only one or a plurality of internal core plies have a vault structure.

39. The plastic component according to claim 38, which has a composite structure prepared from a plurality of different materials.

40. The plastic component according to claim 39, which has a composite structure of plastic and metal.

41. Use of a plastic component which is produced by a method according to at least one of claims 1 to 29, or of a plastic component according to at least one of claims 30 to 40 as:
- a sound-absorbing component,
- a lightweight wall,
- an installation component, in particular for pipes or ducts,
- a thermally stable component for use under fluctuating temperatures,
- a housing component for machinery and vehicles, in particular aircraft, railway vehicles or spacecraft,
- an impact-absorbing component, and/or
- a design element, in particular with a glare-reducing effect.

## Revendications

1. Procédé de fabrication d'un composant en plastique (10), comprenant les étapes consistant à :
- mettre en place une couche de structuration (11, 12) entre des premiers éléments de support (20) et un premier élément de pression (30), et
- gaufrer la couche de structuration (11, 12), le gaufrage de la couche de structuration (11, 12) comprenant les étapes consistant à :
- supporter la couche de structuration (11, 12) sur une première surface (13) au moyen des premiers éléments de support (20), et
- appliquer une pression à la couche de structuration (11, 12) sur la deuxième surface opposée (14) entre les premiers éléments de support (20), au moyen du premier élément de pression (30), de façon qu'il se forme dans la couche de structuration (11, 12), entre les premiers éléments de support (20), des gaufrures (2) d'une structure gaufrée formée par auto-organisation,
**caractérisé en ce que**
- la couche de structuration (11, 12) contient une composition d'un matériau de renfort et d'un liant réticulable, et
- il est prévu un durcissement de la couche de structuration (11, 12) pendant ou après le gaufrage.

2. Procédé selon la revendication 1, dans lequel la couche de structuration (12) est disposée après le gaufrage entre des deuxièmes éléments de support (50) et un deuxième élément de pression (60) et soumise à une post-structuration en appliquant une pression à la couche de structuration (12).

3. Procédé selon la revendication 2, dans lequel la post-structuration se fait en sens inverse par rapport à celui du gaufrage précédent.

4. Procédé selon l'une au moins des revendications précédentes, dans lequel le gaufrage et/ou la post-structuration se font en appliquant une pression avec auto-organisation à la couche de structuration (11, 12).

5. Procédé selon l'une au moins des revendications 1 à 3, dans lequel les premiers ou deuxièmes éléments de support (20, 50) présentent une géométrie qui correspond à une structure gaufrée formée par auto-organisation et le gaufrage se fait en appliquant une pression avec formage de la couche de structuration (11, 12) par les premiers ou deuxièmes éléments de support (20, 50).

6. Procédé selon la revendication 2, dans lequel le durcissement de la couche de structuration (12) est prévu pendant ou après la post-structuration.

7. Procédé selon l'une au moins des revendications précédentes, dans lequel le durcissement se fait au moyen d'un traitement thermique et/ou radiochimique de la couche de structuration (11, 12).

8. Procédé selon l'une au moins des revendications précédentes, dans lequel le durcissement comprend une transition de la composition du matériau de renfort et du liant d'un état caoutchoutique à un état vitreux.

9. Procédé selon l'une au moins des revendications précédentes, dans lequel la mise en place de la couche de structuration (11) comprend un agencement exclusif de la couche de structuration (11) entre les premiers éléments de support (20) et le premier élément de pression (30).

10. Procédé selon l'une au moins des revendications 1 à 7, dans lequel la mise en place de la couche de structuration (11) comprend un agencement d'une structure stratifiée (70) qui contient la couche de structuration (11) et au moins une couche support (71, 72) entre les premiers éléments de support (20) et le premier élément de pression (30), le gaufrage et/ou la post-structuration se faisant par l'application d'une pression avec auto-organisation à ladite au moins une couche support (71, 72) et/ou à la couche de structuration (11, 12).

11. Procédé selon la revendication 10, dans lequel la structure stratifiée (70) comprend une première couche support (71), la couche de structuration (11) et une deuxième couche support (72).

12. Procédé selon la revendication 10 ou la revendication 11, dans lequel ladite au moins une couche support comprend au moins une couche métallique et/ou au moins une feuille de matière plastique.

13. Procédé selon la revendication 12, dans lequel la couche métallique comprend une tôle d'acier ou d'aluminium.

14. Procédé selon la revendication 12 ou la revendication 13, dans lequel, pour le durcissement de la couche de structuration, il est prévu un chauffage inductif de ladite au moins une couche métallique.

15. Procédé selon l'une au moins des revendications 10 à 14, dans lequel ladite au moins une couche support (71, 72) est percée de trous.

16. Procédé selon l'une au moins des revendications 10 à 15, dans lequel un agent réduisant l'adhérence (73, 74) est déposé sur un côté au moins de la couche de structuration (11) ou de ladite au moins une couche support (71, 72).

17. Procédé selon l'une au moins des revendications 10 à 16, dans lequel l'agencement de la structure stratifiée (70) comprend une jonction de bandes supérieures et inférieures (71, 72) formant les couches supports et de la couche de structuration (11).

18. Procédé selon la revendication 17, dans lequel les bandes (71, 72) sont soumises à un lissage après le gaufrage ou la post- structuration et amenées à un processus continu d'agencement de la structure stratifiée (70).

19. Procédé selon l'une au moins des revendications précédentes, dans lequel le matériau fibreux contient des fibres naturelles ou des fibres synthétiques.

20. Procédé selon la revendication 19, dans lequel les fibres utilisées sont des fibres de cellulose, des fibres de verre, des fibres textiles et/ou des fibres de carbone.

21. Procédé selon l'une au moins des revendications précédentes, dans lequel le matériau fibreux utilisé est constitué de demi-produits textiles plats.

22. Procédé selon l'une au moins des revendications précédentes, dans lequel le liant réticulable utilisé est :
(a) un polymère réticulable,
(b) un prépolymère,
(c) une combinaison d'un polymère réticulable ou d'un prépolymère avec un matériau thermoplastique,
(d) une combinaison d'un polymère réticulable ou d'un prépolymère avec un matériau élastomère,
(e) un composé contenant des groupes chimiquement réactifs, ou
(f) une combinaison d'au moins deux liants suivant (a) à (e).

23. Procédé selon la revendication 22, dans lequel le liant réticulable utilisé est au moins une substance choisie dans le groupe constitué par des résines phénoliques, des résines mélaminiques, des résines uréiques, des uréthanes, des isocyanates, des résines époxydiques, des acrylates, des polyesters insaturés, des polyesters, des esters vinyliques, des résines ou caoutchoucs de silicone, des résines à base de cyanates, des bismaléimides, des résines à base de maléimides, des benzoxazines, des perfluorocyclobutanes et des biscyclobutanes.

24. Procédé selon l'une au moins des revendications précédentes, dans lequel le durcissement comprend une réaction de la couche de structuration pour donner un duroplastique ou un élastomère.

25. Procédé selon l'une au moins des revendications précédentes, dans lequel une couche de structuration (15) multiplis est soumise au gaufrage.

26. Procédé selon l'une au moins des revendications précédentes, dans lequel la couche de structuration (11, 12) comprend une bande continue de matériau et la mise en place et le gaufrage de la couche de structuration (11, 12) se font en continu, les premiers éléments de support (20) étant disposés sur la surface d'enveloppe d'un cylindre d'appui rotatif (21), tandis que le premier élément de pression (30) est formé par une surface d'enveloppe élastique d'un cylindre de pression (31), et la couche de structuration (11, 12) passant en vue du gaufrage entre le cylindre d'appui (21) et le cylindre de pression (31).

27. Procédé selon l'une au moins des revendications précédentes, dans lequel une couche intermédiaire élastique est disposée entre la couche de structuration (11, 12) et l'un au moins des premiers ou deuxièmes éléments de support (20, 50) et des premiers ou deuxièmes éléments de pression (30, 60).

28. Procédé selon l'une au moins des revendications précédentes, dans lequel la couche de structuration (11, 12) est soumise à une reprise qui comprend une opération au moins parmi un formage, une division, un assemblage avec une autre couche de structuration, un usinage des bords et un revêtement.

29. Procédé selon l'une au moins des revendications précédentes, dans lequel la composition du matériau de renfort et du liant réticulable comprend un préimprégné.

30. Composant en plastique qui présente une couche de structuration, avec une structure gaufrée de la couche de structuration formée par auto-organisation, **caractérisé en ce que** la couche de structuration comprend une composition d'un matériau de renfort et d'un liant réticulé.

31. Composant en plastique selon la revendication 30, dans lequel le matériau de renfort comprend des fibres naturelles ou des fibres synthétiques.

32. Composant en plastique selon la revendication 31, dans lequel le matériau fibreux comprend des fibres de cellulose, des fibres de verre, des fibres textiles et/ou des fibres de carbone.

33. Composant en plastique selon l'une au moins des revendications 30 à 32, dans lequel le matériau fibreux comprend des semi-produits textiles plats.

34. Composant en plastique selon l'une au moins des revendications 30 à 33, dans lequel le composant en plastique contient un duroplastique ou un élastomère.

35. Composant en plastique selon l'une au moins des revendications 30 à 34, dans lequel la couche de structuration est à un seul pli.

36. Composant en plastique selon l'une au moins des revendications 30 à 36, dans lequel la couche de structuration est multiplis.

37. Composant en plastique selon la revendication 36, dans lequel la couche de structuration contient un polymère thermoplastique.

38. Composant en plastique selon l'une au moins des revendications 30 à 37, qui présente une structure sandwich avec plusieurs couches de bandes continues de matériau superposées, seules une ou plusieurs couches centrales internes présentant une structure gaufrée.

39. Composant en plastique selon la revendication 38, qui présente une structure composite faite de plusieurs matériaux différents.

40. Composant en plastique selon la revendication 39, qui présente une structure composite à base de matière plastique et de métal.

41. Utilisation d'un composant en plastique obtenu par un procédé selon l'une au moins des revendications 1 à 29 ou d'un composant en plastique selon l'une au moins des revendications 30 à 40 commue :
- composant isolant acoustique,
- cloison légère,
- composant d'installation, en particulier pour des tuyaux ou des gaines,
- composant thermostable destiné à être utilisé dans des conditions de contraintes thermiques alternées,
- composant d'habillage de machines et de véhicules, en particulier d'aéronefs, de véhicules ferroviaires ou d'engins spatiaux,
- composant absorbant les chocs, et/ou
- élément d'aménagement, en particulier ayant un effet de réduction de l'éblouissement.
